# EUROPEAN PATENT SPECIFICATION

(11) **EP 2 851 562 B1**
(45) Date of publication and mention of the grant of the patent: **08.03.2017**
(21) Application number: 14170469.2
(22) Date of filing: 29.05.2014
(51) Int. Cl.: F16H 61/4183, F03D 15/00

(54) **Hydraulic transmission**
Hydraulikgetriebe
Transmission hydraulique

(30) Priority: 18.09.2013 JP 2013192943; 31.10.2013 JP 2013227386
(43) Date of publication of application: 25.03.2015
(73) Proprietor: MITSUBISHI HEAVY INDUSTRIES, LTD., Tokyo 108-8215 (JP); Artemis Intelligent Power Limited, Loanhead, Midlothian EH20 9TB (GB)
(72) Inventor: Ohira, Takeo, Tokyo, 108-8215 (JP); Ichinose, Hidekazu, Tokyo, 108-8215 (JP); Caldwell, Niall, Loanhead, Midlothian, EH20 9TB (GB)
(74) Representative: Alistair Hindle Associates Limited

(56) References cited:
- EP-A2- 2 623 779
- WO-A1-2013/114437
- WO-A2-2011/104543
- WO-A2-2013/005259
- DE-U1-202009 009 696

## Description

### Field of the invention

The invention relates to the field of hydraulic transmissions comprising variable displacement hydraulic pumps and motors having electronically controlled valves which can be controlled to determine whether each cylinder carries out an active cycle or an inactive cycle on each cycle of cylinder working volume, and machines including such hydraulic transmissions.

### Background to the invention

It is known to use a hydraulic transmission with a variable displacement hydraulic pump and a variable displacement hydraulic motor in apparatus such as wind turbine generators and vehicles. For example, in the case of a wind turbine generator, a variable displacement hydraulic pump may be driven by a drive shaft connected to a rotor which is driven by the wind, and one or more variable displacement hydraulic motors may be connected to one or more electrical generators, and driven by pressurised working fluid from the output of the hydraulic pump. In the case of a vehicle, an internal combustion engine or battery may drive the hydraulic pump and a hydraulic motor may drive each wheel, or other actuator.

Suitable variable displacement hydraulic pumps and motors include those which comprise a rotating shaft and a plurality of cylinders of cyclically varying working volume, in which the displacement of working fluid through each cylinder is regulated by electronically controllable valves, on each cycle of cylinder working volume, and in phased relationship to cycles of cylinder working volume, to determine the net throughput of working fluid by the machine. For example, EP 0361927 disclosed a method of controlling the net throughput of working fluid through a multi-cylinder pump by opening and/or closing electronically controllable valves, in phased relationship to cycles of cylinder working volume, to regulate fluid communication between individual cylinders of the pump and a low pressure working fluid line. As a result, individual cylinders are selectable by a controller, on each cycle of cylinder working volume, to either displace a predetermined fixed volume of working fluid ( an active cycle), or to undergo an inactive cycle (also referred to as an idle cycle) in which there is no net displacement of working fluid, thereby enabling the net throughput of the pump to be matched dynamically to demand. EP 0494236 developed this principle and included electronically controllable poppet valves, which regulate fluid communication between individual cylinders and a high pressure working fluid line, thereby facilitating the provision of a hydraulic motor (which in some embodiments may function as a pump or a motor in alternative operating modes). EP 1537333 introduced the possibility of active cycles in which only part of the maximum displacement of an individual cylinder was selected.

Wind turbine generators, vehicles, or other machines including hydraulic transmissions, may be damaged by resonant oscillations arising from the operation of the machine including resonant oscillations arising from the operation of the hydraulic transmission. For example, EP 2146093 discloses a method and arrangement for damping oscillation in the tower of a wind turbine generator by controlling a power offset signal. US 7309930 discloses a vibration damping system and method in which oscillations of the turbine tower are damped by controlling the torque produced by the generator. EP 1719910 discloses a method of actively damping vibrations in a wind turbine tower in which the pitch angle of the wind turbine blades is controlled.

EP 2 623 779 A2, WO 2011/104543 A2, WO 2013/005259 A2 and
WO 2013/114437 A1, which is the prior art closest to the invention, disclose further hydraulic transmissions of the related art.

However, it has been found that when employing hydraulic pumps and motors of the type described above, vibrations may arise, resulting from the pulsatile nature of the flow through the hydraulic pump, or motor, which may lead to oscillations if they coincide with a resonant frequency of one or more components. Vibrations may arise which are dependent on the frequency with which active cycles take place. For example, if ten active cycles take place per second, spaced equally apart in time, vibrations may rise at 10 Hz. Problems may also arise from vibrations associated with the frequency of inactive cycles of cylinder working volume. For example, if 90% of cylinders undertake an active cycle and one cylinder per second carries out an inactive cycle, spaced equally apart in time, there may be a vibration of 10 Hz, as a result. Such vibrations can be more damaging, simply because they become relevant when the pump or motor is operating at a high proportion of maximum displacement, and therefore in circumstances where there is a high power throughput, and greater forces are acting.

It is difficult to avoid resonances arising from these vibrations because of the wide range of conditions under which wind turbine generators and other machines may operate, and the complex factors which determine what vibrations may be generated by hydraulic pumps or motors of the above type.

### Summary of the invention

According to a first aspect of the present invention there is provided a hydraulic transmission, comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of the hydraulic pump and the hydraulic motor comprises:
a rotatable shaft,
a shaft sensor which measures the position or speed of rotation of the rotatable shaft,
at least one cam having at least one lobe,
a plurality of cylinders having working volumes which vary cyclically with rotation of the rotatable shaft,
a low pressure working fluid line and a high pressure working fluid line,
a plurality of valves regulating the flow of working fluid between each cylinder and the low and high pressure working fluid lines, at least one said valve associated with each cylinder being an electronically controlled valve, wherein the hydraulic transmission comprises control means (such as one or more controllers) configured to generate command signals to actively control the said electronically controlled valves to thereby determine whether each cylinder carries out an active cycle in which there is a net displacement of working fluid or an inactive cycle in which there is no net displacement of working fluid, for each cycle of cylinder working volume, wherein the fundamental frequency of cylinders carrying out active cycles or the fundamental frequency of cylinders carrying out inactive cycles is proportional to the speed of rotation of the rotatable shaft,
and characterised in that the control means is configured to control the hydraulic transmission to avoid the frequency of one or more intensity peaks of the frequency spectrum of the pattern of active and inactive cycles of cylinder working volume carried out by the cylinders remaining within one or more ranges of undesirable frequencies, or to reduce the intensity of one or more said intensity peaks within the one or more ranges of undesirable frequencies, taking into account the speed of rotation of the rotatable shaft,
wherein the control means is configured to calculate a proposed displacement of working fluid by the at least one of the pump and the motor, and to calculate the frequency of one or more intensity peaks of the frequency spectrum of the pattern of active and inactive cycles of cylinder working volume which would arise if the at least one pump or motor was requested to implement the proposed displacement of working fluid and to compare the calculated frequency or frequencies with the one or more ranges of undesirable frequencies.

Typically, the one or more ranges of undesirable frequencies comprise one or more resonant frequencies of a portion of a machine, which is part of or in mechanical communication with (e.g. mechanically coupled to) the hydraulic transmission. Typically, at least one said resonant frequency (or all said resonant frequencies, and accordingly at least one said range of undesirable frequencies) does not vary proportionately to the speed of rotation of the rotatable shaft. It may be that the at least one said resonant frequency (or all said resonant frequencies, and accordingly at least one said range of undesirable frequencies) does not vary with the speed of rotation of the rotatable shaft.

The phenomenon of resonance of the portion of the machine as a result of excitation by the hydraulic transmission is thereby avoided. The portion of the machine may be part of (e.g. one or more components of) the hydraulic transmission (for example, a drive shaft connected to the hydraulic pump or the hydraulic motor) or may be one or more components which are in mechanical communication with (e.g. mechanically coupled to) the hydraulic transmission, for example, a blade or the tower of a wind turbine generator housing the hydraulic transmission.

It may be that one or more of the resonant frequencies (and therefore ranges of undesirable frequencies) does vary with the speed of rotation of the rotatable shaft, but not proportionately to the speed of rotation of the rotatable shaft. For example, the stiffness of the blades of a wind turbine generator, and therefore the frequency of one or more modes of resonance of the blades, increases with the speed of rotation of the rotatable shaft of the pump to which they are coupled, but not linearly. One or more of the resonant frequencies (and therefore ranges of undesirable frequencies) may vary dependent on a parameter, which may be independent of the speed of rotation of the rotatable shaft. For example, one or more said resonant frequencies may depend on the position of a ram or boom. Fluid oscillation between two accumulators in a hydraulic line may vary with the pressure in the hydraulic line. For example, resonant frequencies of a ram may depend on the position of the ram. In some cases, one or more resonant frequencies may depend on more than one parameter, some or all of which may be independent of the speed of rotation of the rotatable shaft, for example, a machine having two rams might have modes of resonance at frequencies which depend on the position of each ram. The one or more parameters may be measured parameters, measured by one or more sensors.

In some embodiments, the resonant frequency of one or more oscillations can be determined by analysing a signal (e.g. the pressure in the high pressure line, the speed of rotation of the rotatable shaft, the signal from a sensor attached to a potentially resonating portion of the machine, such as an accelerometer or strain gauge) to identify one or more oscillations (e.g. by frequency analysis) and the resonant frequency of the one or more oscillations, and by then setting one or more ranges of undesirable frequencies to include the determined one or more frequencies.

The control means may therefore comprise or receive data from a resonance determining module which is operable to determine one or more of the ranges of undesirable frequencies. The valve control module may therefore comprise or receive data concerning one or more of the ranges of undesirable frequencies from the resonance determining module. The resonance determining module may determine one or more of the ranges of undesirable frequencies in dependence on one or more measured parameters. The resonance determining module may determine one or more of the ranges of undesirable frequencies in dependence on one or more measured parameters which are independent of the speed of rotation of the rotatable shaft. The resonance determining module may process data from one or more said sensors (which may measure one or more said measured parameters). The resonance determining module may receive the speed of rotation of the rotatable shaft as an input. The resonance determining module may carrying out said analysing of a signal to identify a resonance.

Due to the periodicity of cycles of cylinder working volume, the pattern of active and inactive cycles carried out by the cylinders can result in resonant vibrations in mechanical components which are part of or in mechanical communication (e.g. mechanically coupled to) the hydraulic transmission (e.g. mechanically coupled to the at least one of the hydraulic pump and motor). The pattern of active and inactive cycles carried out by the cylinders is determined by the pattern of command signals and so the control means may determine the pattern of active and inactive cycles by determining the pattern of control signals. Nevertheless, it is the pulsatile flow arising from the pattern of active and inactive cycles which generates resonant vibrations.

The pattern of active and inactive cycles carried out by the cylinders has a frequency spectrum with one or more intensity peaks. For example, if the cylinders carried out active and inactive cycles alternately, there would be an intensity peak at a frequency equal to half of the frequency of cycles of cylinder working volume. More generally, the cylinders will undergo a more complex pattern of active and inactive cycles, which will have having a frequency spectrum with one or more intensity peaks. The frequency spectrum can be obtained from the patterns of active and inactive cycles by frequency analysis, e.g. carrying out a fast Fourier transform.

The inventors have recognised that the frequency of these intensity peaks varies not only with the sequence of the active and inactive cycles (i.e. the order in which active and inactive cycles take place) but with the speed of rotation of the rotatable shaft. For example, if the rotatable shaft speeds up by x%, the frequency of cycles of cylinder working volume will increase by x% and the frequency of some or all intensity peaks will increase by x%. Accordingly, the frequency of some or all of the intensity peaks is proportional to speed of rotation of the rotatable shaft.

The invention controls the hydraulic transmission so as to avoid intensity peaks in said frequency spectrum persisting at frequencies which coincide with resonant frequencies of portions of the machine, such as components of the hydraulic transmission or components which are in mechanical communication with (e.g. mechanically coupled to) the hydraulic transmission (for example, resonant frequencies of turbine blades or a turbine tower in embodiments where the hydraulic transmission is incorporated into a wind turbine generator).

It may be that the said frequency of one or more intensity peaks is at the fundamental frequency of cylinders carrying out active cycles, or a linear function thereof, or the fundamental frequency of cylinders carrying out inactive cycles, or a linear function thereof.

The linear function may be an integer multiple (>1) of the fundamental frequency of cylinders carrying out active cycles, or the fundamental frequency of cylinders carrying out inactive cycles (i.e. a harmonic thereof), nevertheless there can be circumstances where it is desirable to avoid frequencies which are non-integer multiples e.g. 2.5 times the fundamental frequency of cylinders carrying out active cycles, or the fundamental frequency of cylinders carrying out inactive cycles. There may also be a linear offset.

By the fundamental frequency of cylinders carrying out active cycles we refer to the time averaged frequency (cylinders per second) with which the number of cylinders which are carrying out an active cycle varies. By the fundamental frequency of cylinders carrying out inactive cycles (cylinders per second) we refer to the time averaged frequency with which the number of cylinders carrying out an inactive cycle varies. As each cylinder is caused to undertake either active cycles or inactive cycles on each cycle of cylinder working volume, the fundamental frequency of cylinders carrying out active cycles and the fundamental frequency of cylinders carrying out inactive cycles together sum to a constant.

If each cylinder operates at a different phase, then the constant typically equals the frequency of cycles of cylinder working volume multiplied by the number of cylinders. However, if this is not the case and a number of cylinders operate at substantially the same phase throughout cycles of cylinder working volume, then the constant will be less. For example, if the cylinders are operated in groups of C cylinders which have substantially the same phase throughout cycles of cylinder working volume, then the said constant will equal the frequency of cycles of working chamber volume multiplied by the number of cylinders divided by C.

It is the frequency with which the number of cylinders carrying out active (or inactive, as appropriate) cycles varies which is important. If the number of cylinders carrying out active (or inactive as appropriate) cycles was changed by a constant amount, that does not affect the fundamental frequency. For example, if at successive decision points as to whether one or more cylinders should undergo active or inactive cycles, it is determined that 0, 0, 0, 1, 0, 0, 0, 1 cylinders will undergo an active cycle then the fundamental frequencies are not affected by determining that 1, 1, 1, 2, 1, 1, 1, 2 cylinders will undergo an active cycle.

The frequency of cylinder selections carrying out active or inactive cycles is proportional to the speed of rotation of the rotatable shaft (revolutions per second). This is because there will typically be one point during each cycle of cylinder working volume where a given cylinder is committed to either carry out an active cycle or an inactive cycle. For example, a decision is typically made whether or not to close an electronically controlled valve regulating the flow of working fluid between a cylinder and the low pressure working fluid line.

Accordingly, the invention recognises that the at least one of the hydraulic pump and the hydraulic motor will generate vibrations having intensity peaks at frequencies which depend on the pattern of active and inactive cycles and which, for a given sequence of active and inactive cycles, are proportional to the speed of rotation of the rotatable shaft. According to the invention, the transmission is controlled to avoid one or more fundamental frequencies of cylinders carrying out active cycles, or harmonics thereof, or of cylinders carrying out inactive cycles, or harmonics thereof, remaining within one or more ranges of undesirable frequencies.

In some embodiments, it is permitted for the frequency of an intensity peak in the frequency spectrum of the pattern of active and inactive cycles of cylinder working volume to remain within one or more ranges of undesirable frequencies for a restricted period of time, for example, for less than one hundred rotations of the rotatable shaft or less than ten rotations of the rotatable shaft. This is because undesirable resonances typically take some time to build up and increase in amplitude.

The control means may also take into account one or more signals which determine the pattern of active and inactive cycles carried out by the cylinders or which represent the pattern of active and inactive cycles carried out by the cylinders.

One or more said signals may be a demand signal representative of a target time averaged displacement of working fluid by the at least one of the hydraulic pump and the hydraulic motor. The frequency of the intensity peaks in the frequency spectrum of the pattern of active and inactive cycles of cylinder working volume depends not only on the speed of rotation of the rotatable shaft but also on the sequence of active and inactive cycles of cylinder working volume which may in turn depend on the demand signal. This demand signal may be received by the control means or generated by the control means. The demand signal may, for example, be expressed as a volume fraction of the maximum possible net displacement of working fluid by the at least one of the hydraulic pump and the hydraulic motor (which is the proportion of maximum displacement per revolution of the rotatable shaft), or as an absolute value of the required net displacement of working fluid by the at least one of the hydraulic pump and the hydraulic motor, or as a desired torque (which is the product of the time averaged net displacement and the pressure in the high pressure working fluid line).

However, factors which affect the pattern of selection of active and inactive cycles of the cylinders other than simply the demand signal may also be taken into account by the control means. For example the control means may also take into account the fraction of maximum net displacement of working fluid by individual cylinders during active cycles. If the fraction of maximum net displacement of working fluid by cylinders during active cycles varies between active cycles, then this can change the frequency of the resulting intensity peaks.

It may be that, for a group of cylinders in the plurality of cylinders, there is another cylinder within the group of cylinders which has substantially the same working volume throughout cycles of cylinder working volume.

The group of cylinders may be a subset of the plurality of cylinders. The group of cylinders may be all of the plurality of cylinders.

Typically, the cylinders in the group of cylinders are in driving relationship with the same ring cam, and the said ring cam has a plurality of lobes, such that for each cylinder in the group of cylinders, there is another cylinder which has substantially the same working volume throughout cycles of cylinder working volume.

By in driving relationship we mean either the cylinders are driven by rotation of the ring cam (in the case of a hydraulic pump) or drive the rotation of the ring cam (in the case of a hydraulic motor).

It may be that the group of cylinders in driving relationship with the same ring cam comprises A cylinders, the ring cam has B lobes and the number of cylinders having substantially the same working volume throughout cycles of cylinder working volume (the redundancy, C) is the greatest common divisor of A and B.

Typically, the cylinders in the group of cylinders are distributed around the rotatable shaft such that the relative phase of the cycles of working volume of the cylinders in the group are evenly distributed. The cylinders in a group of cylinders may be evenly distributed around the rotatable shaft.

It may be that the group of cylinders consists of a number (D, the phase number) of sets of the same number (C, the redundancy) of cylinders having substantially the same working volume throughout cycles of cylinder working volume, and the control means selects whether each cylinder in a said set of cylinders should undergo an active or an inactive cycle on a given cycle of cylinder working volume at a single decision point.

The decision points for each set of cylinders having substantially the same working volume throughout cycles of cylinder working volume take place when the cylinder working volume is at a predetermined phase and therefore when the rotatable shaft is at one or more predetermined orientations.

It may be that the cylinders in the group of cylinders are driven by one or more cams having a number (B), which is greater than one, of lobes, and wherein the number of decision points per revolution of the rotatable shaft (E) is B x D.

It may be that the control means is configured to control the hydraulic transmission to avoid the frequency of one or more intensity peaks of the frequency spectrum of the pattern of active and inactive cycles of cylinder working volume remaining within one or more ranges of undesirable frequencies, taking into account the speed of rotation of the rotatable shaft by increasing or decreasing the proportion of cylinders which carry out active cycles.

It may be that the control means receives or generates a demand signal related to a target time averaged displacement of working fluid by the at least one of the hydraulic pump and the hydraulic motor and the control means increases or decreases the proportion of cylinders which carry out active cycles by modifying the received or generated demand signal and using the modified signal to determine the pattern of active and inactive cycles of cylinder working volume carried out by the at least one of the hydraulic pump and the hydraulic motor.

For example, the demand signal may be modified using the jump-up/jump-down method. The demand signal may be modified by increasing or decreasing it so that the frequency of a corresponding intensity peak in the frequency spectrum of the pattern of active and inactive cycles of cylinder working volume arising from the use of the modified demand signal is above or below the respective range of undesirable frequencies.

It may be that the control means controls the hydraulic transmission to avoid the said frequency of one or more intensity peaks in the frequency spectrum of the pattern of active and inactive cycles of cylinder working volume remaining within one or more ranges of undesirable frequencies, by one or more of: causing the pressure in the high pressure working fluid line to increase or decrease and causing the speed of rotation of the rotatable shaft to increase or decrease.

The pressure in the high pressure working fluid line can be varied by the control means by causing the net displacement (volume per second) of the or each hydraulic pump to differ from the net displacement (volume per second) of the or each hydraulic motor.

Typically, changing the pressure in the high pressure working fluid line causes the control means to change the fraction of cylinders carrying out active cycles. The speed of rotation of the rotatable shaft can be caused to increase or decrease by changing the net torque of the at least one of the hydraulic pump and the hydraulic motor, for example by changing the net displacement of the hydraulic pump or the hydraulic motor or the pressure in the high pressure working fluid line.

The control means may control the hydraulic pump and the hydraulic motor so that the pressure in the high pressure working fluid line varies with the power throughput of the hydraulic transmission. For example, the pressure in the high pressure working fluid line may be about 350bar at the upper end of an operating range of power throughput. The pressure in the high pressure working fluid line may be about 200bar at the lower end of an operating range of power throughput.

It may be that the control means is configured to control the hydraulic transmission to avoid the frequency of one or more intensity peaks of the frequency spectrum of the pattern of active and inactive cycles of cylinder working volume remaining within one or more ranges of undesirable frequencies, by skipping at least one of the plurality of cylinders. By skipping we include both causing a cylinder to undergo an inactive cycle when it would otherwise have carried out an active cycle and causing a cylinder to undergo only inactive cycles, and no active cycles.

It may be that the control means is configured to control the hydraulic transmission to avoid the frequency of one or more intensity peaks of the frequency spectrum of the pattern of active and inactive cycles of cylinder working volume remaining within one or more ranges of undesirable frequencies, by skipping at least one of the said group of cylinders, the group of cylinders consisting of a number (D, the phase number) of sets of the same number (C, the redundancy) of cylinders having substantially the same working volume throughout cycles of cylinder working volume.

It may be that the same one or more cylinders are skipped on each rotation of the rotatable shaft while it is required to avoid the frequency of one or more intensity peaks of the frequency spectrum of the pattern of active and inactive cycles of cylinder working volume remaining within a particular one or more ranges of undesirable frequencies

It may be that one or more cylinders are caused to undergo inactive cycles on each successive cycle of cylinder working volume, to thereby avoid the frequency of one or more intensity peaks of the frequency spectrum of the pattern of active and inactive cycles of cylinder working volume remaining within one or more ranges of undesirable frequencies.

The skipping of one or more cylinders has the effect that an intensity peak in the frequency spectrum of the pattern of active and inactive cycles of cylinder working volume is divided into at least two separate intensity peaks, at least one of which has a higher frequency and at least one of which has a lower frequency. It may be that the control means is configured to control the hydraulic transmission to avoid the frequency of one or more intensity peaks of the frequency spectrum of the pattern of active and inactive cycles of cylinder working volume remaining within one or more ranges of undesirable frequencies, by skipping at least one of the plurality of cylinders. Typically, at least one of the at least two separate intensity peaks has a frequency above the applicable range of undesirable frequencies and at least one of the at least two intensity peaks has a frequency below the applicable range of undesirable frequencies, due to the skipping of one or more cylinders.

It may be that the control means is configured to control the hydraulic transmission to reduce the intensity of one or more intensity peaks of the frequency spectrum of the pattern of active and inactive cycles of cylinder working volume by shifting the timing of at least some of the command signals, relative to the cycles of cylinder working volume. For example, the timing of a control signal causing an electronically controlled valve which regulates the flow of fluid between the low pressure line and a cylinder may be advanced or delayed within a cycle of cylinder working volume (relative to the timing if the control means was not acting to reduce the intensity of one or more intensity peaks) to thereby reduce the intensity of one or more intensity peaks of the frequency spectrum of the pattern of active and inactive cycles of cylinder working volume.

It may be that the control means is configured to control the hydraulic transmission to reduce the intensity of one or more intensity peaks of the frequency spectrum of the pattern of active and inactive cycles of cylinder working volume by changing (e.g. reducing) the net displacement of working fluid during one or more active cycles of cylinder working volume. Again, this may reduce the intensity of one or more intensity peaks of the frequency spectrum of the pattern of active and inactive cycles of cylinder working volume.

The control means may be configured to concurrently control the hydraulic transmission to avoid the frequency of one or more intensity peaks of the frequency spectrum of the pattern of active and inactive cycles of cylinder working volume remaining within one or more ranges of undesirable frequencies (for example by skipping at least one of the plurality of cylinders) and to control the hydraulic transmission to reduce the intensity of one or more intensity peaks of the frequency spectrum of the pattern of active and inactive cycles of cylinder working volume within the one or more ranges of undesirable frequencies (for example by shifting the timing of at least some of the command signals and/or changing the displacement of active cycles).

It may be that the control means determines the frequency of one or more of the said intensity peaks in the frequency spectrum of the pattern of active and inactive cycles of cylinder working volume by determining a value indicative of a frequency in units proportional to cycles per revolution of the rotatable shaft and then multiplying that value by a value which is proportional to the speed of rotation of the rotatable shaft.

For example, if the value is 300 cycles (of a vibration) per revolution of the rotatable shaft and the speed of rotation of the rotatable shaft is 10 revolutions per second, the determined frequency of the respective intensity peak will be 3,000 cycles per second.

The rotatable shaft speed which is taken into account is typically a measured speed of rotation of the rotatable shaft (which may, for example a measured by the shaft sensor, or obtained by processing data received from the shaft sensor). However, rotatable shaft speed may for example be calculated, or controlled to have a certain value.

The said value indicative of a frequency in units proportional to cycles per revolution of the rotatable shaft may be determined taking into account the pattern of selection of active and inactive cycles of cylinders.

It may be that the control means is configured to control the hydraulic transmission to avoid the fundamental frequency of active cycles, or a harmonic thereof, remaining within one or more ranges of undesirable frequencies, taking into account the speed of rotation of the rotatable shaft.

It may be that the control means is configured to control the hydraulic transmission to avoid the fundamental frequency of inactive cycles, or a harmonic thereof, remaining within one or more ranges of undesirable frequencies, taking into account the speed of rotation of the rotatable shaft.

By "in mechanical communication with" as well as mechanically coupled or connected to we include coupled to the hydraulic pump or motor through a hydraulic circuit (including coupled to through a hydraulic circuit and an actuator).

By the terms hydraulic pump and hydraulic motor we include a hydraulic ram (when acting as a source or sink of pressurised hydraulic fluid respectively).

The invention extends in a second aspect to a machine comprising a hydraulic transmission according to the first aspect of the invention, wherein one or more said ranges of undesirable frequencies include one or more resonant frequencies of a portion of the machine (typically a component of the hydraulic transmission or a component in mechanical communication with (e.g. mechanically coupled to) the hydraulic transmission) which do not vary proportionately to the speed of rotation of the rotatable shaft. It may be that one or more of the said resonant frequencies of a portion of the machine do not vary with the speed of rotation of the rotatable shaft.

The machine may be a wind turbine generator having a turbine coupled to the hydraulic pump and comprising a plurality of blades, and an electricity generator coupled to the hydraulic motor, wherein one or more said ranges of undesirable frequencies include one or more of: a resonant frequency of the blades, a resonant frequency of the turbine, a resonant frequency of a tower of the wind turbine generator, and a resonant frequency of a drive shaft connecting the turbine to the hydraulic pump.

It may be that the one or more said ranges of undesirable frequencies include a range of frequencies including a resonant frequency of the tower between 0.2 and 0.7 Hz.

The invention extends in a third aspect to a method of operating a hydraulic transmission, the hydraulic transmission comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of the hydraulic pump and the hydraulic motor comprises:
a rotatable shaft,
a shaft sensor which measures the position or speed of rotation of the rotatable shaft, at least one cam having at least one lobe,
a plurality of cylinders having working volumes which vary cyclically with rotation of the rotatable shaft,
a low pressure working fluid line and a high pressure working fluid line,
a plurality of valves regulating the flow of working fluid between each cylinder and the low and high pressure working fluid lines, at least one said valve associated with each cylinder being an electronically controlled valve,
wherein the method comprises generating command signals to actively control the said electronically controlled valves to thereby determine the net displacement of working fluid by each cylinder on each cycle of cylinder working volume,
wherein the fundamental frequency of cylinders carrying out active cycles or the fundamental frequency of cylinders carrying out inactive cycles is proportional to the speed of rotation of the rotatable shaft,
and characterised in that the method comprises controlling the hydraulic transmission so that the frequency of one or more intensity peaks in the frequency spectrum of the pattern of active and inactive cycles of cylinder working volume does not remain within one or more ranges of undesirable frequencies, or so that the intensity of one or more said intensity peaks within the one or more ranges of undesirable frequencies is reduced, taking into account the speed of rotation of the rotatable shaft,
wherein the method comprises calculating a proposed displacement of working fluid by the at least one of the pump and the motor, calculating the frequency of one or more intensity peaks of the frequency spectrum of the pattern of active and inactive cycles of cylinder working volume which would arise if the at least one pump or motor was requested to implement the proposed displacement of working fluid and comparing the calculated frequency or frequencies with the one or more ranges of undesirable frequencies.

Typically, the one or more ranges of undesirable frequencies comprises one or more resonant frequencies of a portion of a machine, which is part of or in mechanical communication with the hydraulic transmission. Typically, at least one said resonant frequency (and accordingly at least one said range of undesirable frequencies) does not varying proportionately to the speed of rotation of the rotatable shaft.

The method may comprise determining one or more of the ranges of undesirable frequencies. It may be that one or more of the resonant frequencies (and therefore ranges of undesirable frequencies) does not vary with the speed of rotation of the rotatable shaft. It may be that one or more of the resonant frequencies (and therefore ranges of undesirable frequencies) vary with the speed of rotation of the rotatable shaft, but not proportionately to the speed of rotation of the rotatable shaft.

The method may comprise measuring one or more parameters which determine one or more of the resonant frequencies (for example, using one or more sensors) and thereby determining one or more of the ranges of undesirable frequencies. One or more (or all) of the parameters may be independent of the speed of rotation of the rotatable shaft.

The method may comprise controlling the hydraulic transmission to avoid the frequency of one or more intensity peaks of the frequency spectrum of the pattern of active and inactive cycles of cylinder working volume remaining within one or more ranges of undesirable frequencies, by skipping at least one of the plurality of cylinders. The method may comprise skipping at least one of the said group of cylinders, the group of cylinders consisting of a number (D, the phase number) of sets of the same number (C, the redundancy) of cylinders having substantially the same working volume throughout cycles of cylinder working volume.

It may be that the same one or more cylinders are skipped on each rotation of the rotatable shaft while it is required to avoid the frequency of one or more intensity peaks of the frequency spectrum of the pattern of active and inactive cycles of cylinder working volume remaining within a particular one or more ranges of undesirable frequencies.

It may be that one or more cylinders are caused to undergo inactive cycles on each successive cycle of cylinder working volume, to thereby avoid the frequency of one or more intensity peaks of the frequency spectrum of the pattern of active and inactive cycles of cylinder working volume remaining within one or more ranges of undesirable frequencies.

The method may comprise controlling the hydraulic transmission to reduce the intensity of one or more intensity peaks of the frequency spectrum of the pattern of active and inactive cycles of cylinder working volume by shifting the timing of at least some of the command signals, relative to the cycles of cylinder working volume.

The method may comprise controlling the hydraulic transmission to reduce the intensity of one or more intensity peaks of the frequency spectrum of the pattern of active and inactive cycles of cylinder working volume by changing (e.g. reducing) the net displacement of working fluid during one or more active cycles of cylinder working volume.

The method may comprise concurrently controlling the hydraulic transmission to avoid the frequency of one or more intensity peaks of the frequency spectrum of the pattern of active and inactive cycles of cylinder working volume remaining within one or more ranges of undesirable frequencies (for example by skipping at least one of the plurality of cylinders) and controlling the hydraulic transmission to reduce the intensity of one or more intensity peaks of the frequency spectrum of the pattern of active and inactive cycles of cylinder working volume within the one or more ranges of undesirable frequencies (for example by shifting the timing of at least some of the command signals and/or changing the displacement of active cycles).

The method may comprise analysing a signal (e.g. the pressure in the high pressure line, the speed of rotation of the rotatable shaft, the signal from a sensor attached to a potentially resonating portion of the machine, such as an accelerometer or strain gauge) to identify one or more oscillations (e.g. by frequency analysis) and the resonant frequency of the one or more oscillations, and then determining one or more of the ranges of undesirable frequencies including the determined one or more frequencies.

The shaft position sensor may measure the position of the rotatable shaft at each of a plurality of orientations. The shaft position sensor may measure the position of a component which has a position that is coupled to the orientation of the rotatable shaft, for example, the position of a piston. The shaft position sensor may infer the shaft position between measurements of position, for example by measuring the position of the shaft at only one, or a small number (e.g. 2, 3 or 4) different orientations and determining an estimate of shaft speed of rotation and/or rate of change of speed of rotation, from consecutive measurements to thereby estimate instantaneous shaft position.

The control means may comprise one or more controllers. The or each controller may comprise a processor (e.g. a microprocessor or microcontroller) in electronic communication with a processor readable memory storing program code.

Optional features of any one of the three aspects of the invention are optional features of each of the aspect of the invention.

### Description of the Drawings

An example embodiment of the present invention will now be illustrated with reference to the following Figures in which:
Figure 1 is a schematic diagram of a wind turbine generator according to the invention;
Figure 2 is a schematic diagram of a hydraulic motor according to the invention;
Figure 3 is a schematic diagram of the controller of the hydraulic motor;
Figure 4 is a flow diagram of the operation of the transmission controller;
Figure 5 is a flow diagram of an algorithm for determining the displacement by individual cylinders;
Figures 6A and 6B are tables illustrating repetitive execution of the algorithm;
Figures 7A and 7B are schematic diagrams of the variation in the frequency of intensity peaks in the frequency spectrum of the pattern of active and inactive cycles of cylinder working volume with requested displacement;
Figures 8A and 8B are examples of frequency spectrums (sonograms) showing the variation in the intensity of frequency components of the frequency spectrum of the pattern of cylinders carrying out active and inactive cycles as the rate of displacement of working fluid varies from 0 to 100% of maximum displacement in an example embodiment, at a fixed speed of rotation of the rotatable shaft of 1,000rpm;
Figure 9 illustrates the variation in the fundamental frequency of cylinders undergoing active cycles and the fundamental frequency of cylinders undergoing inactive cycles with displacement demand signal;
Figures 10A through 10D shows frequency spectrums of the pattern of cylinders carrying out active and inactive cycles of cylinder working volume at four different values of the displacement demand signal;
Figure 11 is a flow chart of a first example procedure for avoiding undesirable frequencies;
Figure 12 is a flow chart of a second example procedure for avoiding intensity peaks at undesirable frequencies;
Figure 13 is a flow diagram of an algorithm for determining the displacement by individual cylinders with skipping at least one cylinder in the group of cylinders;
Figure 14 is a table illustrating repetitive execution of the algorithm with skipping of at least one cylinder in the group of cylinders;
Figure 15 is a graph of the frequency of intensity peaks with displacement demand fraction (Fd); and
Figure 16 is a graph of the frequency of intensity peaks with skipping of at least one cylinder in the group of cylinders.

### Detailed Description of an Example Embodiment

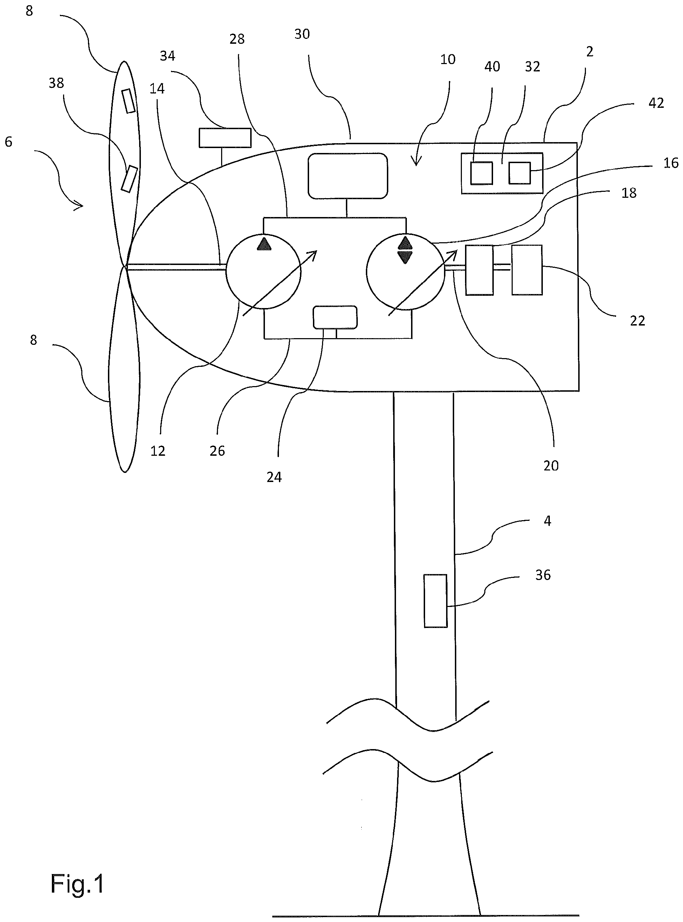

With reference to Figure 1, a wind turbine generator 1 comprises a nacelle 2, supported by a tower 4 and having a turbine 6, with a plurality of blades 8 mounted thereon.

The nacelle houses a hydraulic transmission, shown generally as 10, which comprises a hydraulic pump 12, which has the rotatable shaft that is coupled to the turbine through a drive shaft 14. The transmission also includes a hydraulic motor 16 which has the rotatable shaft that is coupled to an electricity generator 18 through a generator drive shaft 20. The electricity generator is in turn coupled to an electronic grid through a contactor 22.

Within the hydraulic transmission, oil, functioning as working fluid, is supplied from a tank 24 to the input side of the hydraulic pump through low pressure working fluid line 26. Pressurised oil is delivered from an output side of the hydraulic pump to the input side of the hydraulic motor through high pressure working fluid line 28 which is in communication with an oleo pneumatic accumulator 30.

The nacelle also houses a transmission controller 32, which controls the hydraulic transmission by sending control signals to the hydraulic pump and motor, to regulate the displacement of the hydraulic pump and the hydraulic motor. The control signals (the demand signals) request displacement by the pump and motor, expressed as a fraction of maximum displacement. The absolute volume of the displacement (volume of working fluid per second) will be the product of the fraction of maximum displacement, the maximum volume which can be displaced per revolution of the rotatable shaft of the pump or motor and the rate of revolution of the rotatable shaft or motor (revolution per second). This way, the controller can regulate the torque applied through the drive shaft 14, which is proportional to the displacement (volume per second) of the hydraulic pump, and the pressure in the high pressure working fluid line. The controller can also regulate the rate of electricity generation, which depends on the displacement (volume per second) of the hydraulic motor, and the pressure in the high pressure working fluid line. The pressure in the high pressure working fluid line increases when the hydraulic pump displaces oil at a higher displacement (volume per second) than the hydraulic motor, and decreases when the hydraulic pump displaces oil at a lower displacement (volume per second) than the hydraulic motor. The oleo-pneumatic accumulator allows the volume of working fluid in the high pressure side to be varied. In alternative embodiments a plurality of hydraulic pumps and/or a plurality of hydraulic motors are in fluid communication with the high pressure fluid line and so the displacement of each must be considered.

The controller receives, as inputs, signals including the speed of rotation of the rotatable shafts of the pump and motor, and a measurement of the pressure in the high pressure working fluid line. It may also receive a wind speed signal from an anemometer 34, information from the electricity grid, control signals (such as commands to start up or stop, or to increase or decrease high pressure working fluid line pressure in advance of a gust of wind), or other data as required.

The controller also takes into account resonances within the wind turbine generator, such as resonances in the tower, which can be measured using an accelerometer 36, located in the tower or the nacelle, and vibrations in the turbine blades, which can be measured using an accelerometer, or strain gauge 38 mounted on one of the blades.

For the purposes of this example, the controller means comprises a transmission controller 32 comprising a single processor 40, in electronic communication with data storage 42, comprising a tangible computer readable medium, such as solid state memory, which stores the programme, and data required during operation. The control means also comprises machine controllers (not shown in Figure 1) in the pump and motor which generate valve control signals responsive to requested displacement from the transmission controller. Nevertheless, one skilled in the art will appreciate the control means can be implemented as a plurality of distributed computing devices, each of which may implement parts of the overall control functionality, or as a simple device.

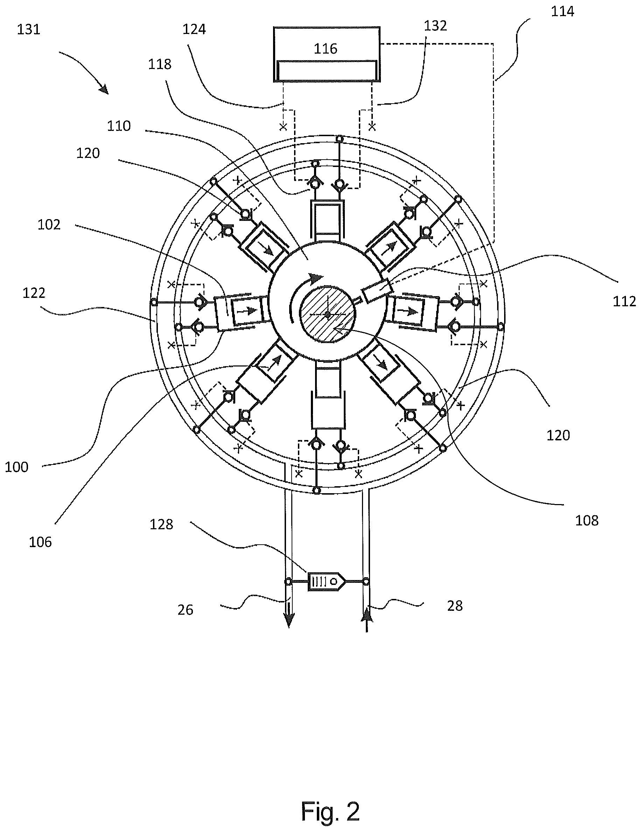

Figure 2 illustrates the hydraulic motor 16 in the form of an electronically commutated hydraulic pump/motor comprising a plurality of cylinders 100 which have working volumes 102 defined by the interior surfaces of the cylinders and pistons 106 which are driven from a rotatable shaft 108 by an eccentric cam 110 and which reciprocate within the cylinders to cyclically vary the working volume of the cylinders. The rotatable shaft is firmly connected to and rotates with the generator drive shaft 20. A shaft position and speed sensor 112 determines the instantaneous angular position and speed of rotation of the shaft, and through signal line 114 informs the machine controller 116 of the motor, which enables the machine controller to determine the instantaneous phase of the cycles of each cylinder.

The cylinders are each associated with Low Pressure Valves (LPVs) in the form of electronically actuated face-sealing poppet valves 118, which face inwards toward their associated cylinder and are operable to selectively seal off a channel extending from the cylinder to a low pressure working fluid line 120, which may connect one or several cylinders, or indeed all as is shown here, to the low pressure working fluid line 26 of the WTG. The LPVs are normally open solenoid closed valves which open passively when the pressure within the cylinder is less than or equal to the pressure within the low pressure working fluid line, i.e. during an intake stroke, to bring the cylinder into fluid communication with the low pressure working fluid line, but are selectively closable under the active control of the controller via LPV control lines 124 to bring the cylinder out of fluid communication with the low pressure working fluid line. Alternative electronically controllable valves may be employed, such as normally closed solenoid opened valves.

The cylinders are each further associated with High Pressure Valves (HPVs) 126 in the form of pressure actuated delivery valves. The HPVs open outwards from the cylinders and are operable to seal off a channel extending from the cylinder to a high pressure working fluid manifold 122, which may connect one or several cylinders, or indeed all as is shown here, to the transmission high pressure working fluid line 28. The HPVs function as normally-closed pressure-opening check valves which open passively when the pressure within the cylinder exceeds the pressure within the high pressure working fluid line. The HPVs also function as normally-closed solenoid opened check valves which the controller may selectively hold open via HPV control lines 132 once that HPV is opened by pressure within the associated cylinder. Typically the HPV is not openable by the controller against pressure in the high pressure working fluid line. The HPV may additionally be openable under the control of the controller when there is pressure in the high pressure working fluid line but not in the cylinder, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the contents of which are hereby incorporated herein by way of this reference, the motor controller selects the net rate of displacement of fluid from the high pressure working fluid line by the hydraulic motor by actively closing one or more of the LPVs shortly before the point of minimum volume in the associated cylinder's cycle, closing the path to the low pressure working fluid line which causes the fluid in the cylinder to be compressed by the remainder of the contraction stroke. The associated HPV opens when the pressure across it equalises and a small amount of fluid is directed out through the associated HPV. The motor controller then actively holds open the associated HPV, typically until near the maximum volume in the associated cylinder's cycle, admitting fluid from the high pressure working fluid line and applying a torque to the rotatable shaft. In an optional pumping mode the controller selects the net rate of displacement of fluid to the high pressure working fluid line by the hydraulic motor by actively closing one or more of the LPVs typically near the point of maximum volume in the associated cylinder's cycle, closing the path to the low pressure working fluid line and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying cylinder working volume and thereby to select the net rate of displacement of fluid from the high pressure to the low pressure working fluid line or vice versa.

Arrows on the ports 26, 28 indicate fluid flow in the motoring mode; in the pumping mode the flow is reversed. A pressure relief valve 128 may protect the hydraulic motor from damage.

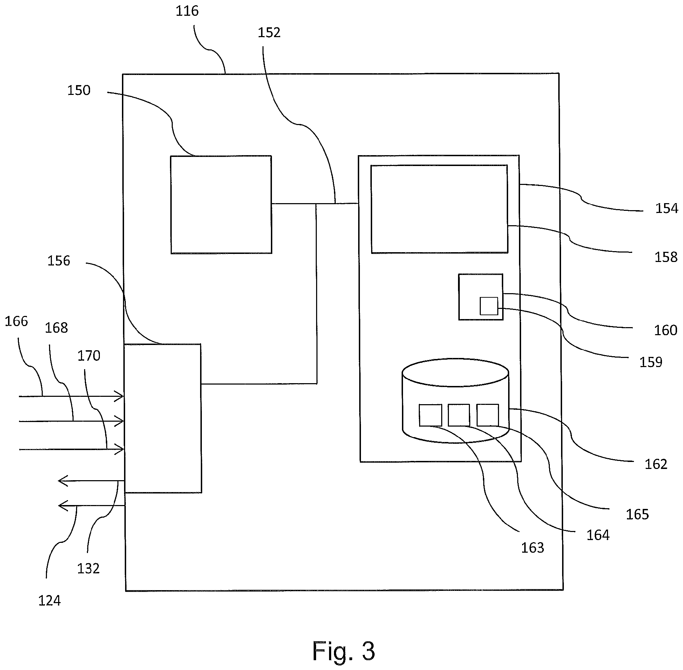

Figure 3 is a schematic diagram of the machine controller 116 of the motor. The structure of the pump controller corresponds. A processor 150, such as a microprocessor or microcontroller, is in electronic communication through a bus 152 with memory 154 and an input-output port 156. The memory stores a program 158 which implements execution of an algorithm to determine the net volume of working fluid to be displaced by each cylinder on each cycle of cylinder working volume, as well as one or more variables 160 which store an accumulated displacement error value and the memory also stores a database 162 which stores data concerning each cylinder, such as the angular position of each cylinder 163 and whether or not it is deactivated 164 (for example, because it is broken). In some embodiments, the database stores the number of times 165 each cylinder has undergone an active cycle. In some embodiments, the program comprises program code 159, functioning as the resonance determining module, which calculates one or more ranges of undesirable frequencies.

The controller receives a displacement demand signal 34, a shaft position (i.e. orientation) signal 166 and typically a measurement of the pressure 168 in the high pressure line. The outputs from the controller include high pressure valve control signals through high pressure valve control lines 132 and low pressure valve control signals through low pressure valve control lines 124. The controller aims to match the total displacement from the cylinders to the displacement demand signal, over time. The shaft position is required to enable valve control signals to be generated in phased relationship with cycles of cylinder working volume. The measurement of pressure can be used to determine the exact amount of working fluid displaced or in other calculations. The controller might also receive signals indicating whether cylinders are broken, and should therefore be disabled, and to enable the database 162 to be updated accordingly.

The hydraulic pump generally corresponds to the hydraulic motor except that it is typically on a larger scale. Instead of a single lobed eccentric there may be more, in the case of a multi-lobe ring cam. The high pressure valve may be entirely passively controlled and may comprise check valves.

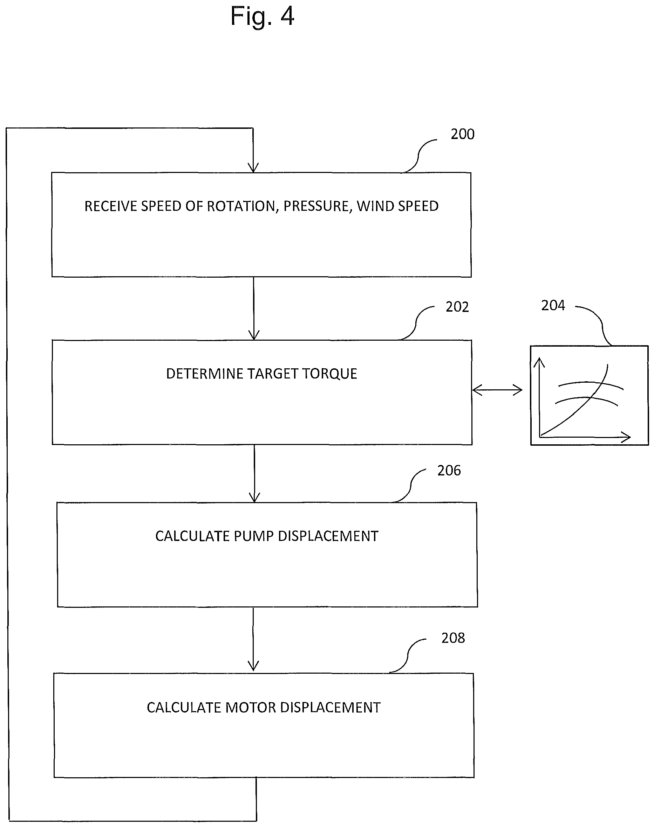

During operation of the hydraulic transmission by the process of Figure 4, the hydraulic transmission controller 30 receives 200 input signals including the speed of rotation of the turbine 2 (which is the same as, or a geared ratio of the speed of rotation of the rotatable shaft of the hydraulic pump, as the two are coupled), and the pressure in the pressurised fluid working fluid line 28, as well as the wind speed. The transmission controller next determines 202 a target torque to be applied to the turbine by the hydraulic pump, with reference to a look up table 204 which summarises ideal target torque and shaft rotation speed at a plurality of different wind speeds. Once a target torque has been determined the transmission controller then calculates 206 the displacement of the hydraulic pump required to obtain the target torque. Volumes of working fluid and rates of displacement may be calculated in any suitable units. This target displacement can for example be calculated as a fraction of the maximum displacement of which the hydraulic pump is capable. In this example, the displacement is expressed as an average percentage of the maximum output per cylinder. The actual rate of displacement which this represents will be the product of both the average fraction of maximum displacement, the maximum volume which can be displaced by a cylinder, the number of cylinders and the speed of rotation of the pump rotatable shaft. The resulting torque will also be proportional to the pressure in high pressure working fluid line.

Once the pump displacement has been calculated, the motor displacement can also be calculated. Typically, the motor displacement is calculated to ensure if remains synchronised with the electricity grid to which the generator is connected through contactor 22. However, a number of other factors may be taken into account. For example, the motor displacement can be varied in order to vary the pressure in the high pressure working fluid line, which increases when motor displacement is less than the displacement by the hydraulic pump, and decreases when the displacement of the hydraulic motor is greater than the displacement of the hydraulic pump. There may be other factors. For example, it may be desirable for one or both of the electricity generators to be switched between being driven at a substantially constant torque, and being switched off, to minimise windage losses and maximise the efficiency of electricity generation.

In this example embodiment, the hydraulic motor has the configuration of Figure 2, in which the cam which drives the pistons has a single lobe, and so there is a single cycle of cylinder working volume per rotation of the rotatable shaft of the hydraulic motor.

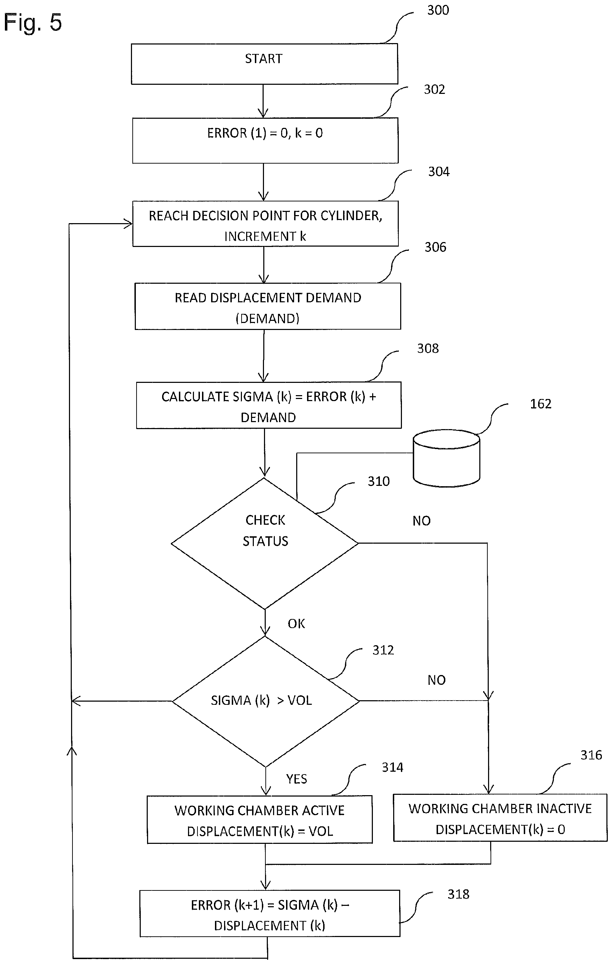

Figure 5 illustrates the procedure carried out by the hydraulic motor to determine the net displacement by each cylinder sequentially. The procedure begins 300, whereupon a stored variable Error (k) (160) is set 302 to zero. The variable Error(k) stores the difference between previous value of the displacement demand (Demand) and previous net displacement determined by the controller (Displacement (k)).

The rotatable shaft of the hydraulic motor then rotates until it reaches 304 a decision point for an individual cylinder and k is increased. For the example shown Figure 2, there are eight cylinders, and so each decision point will be separated by 45 degrees of rotation of the rotatable shaft. The actual period of time which arises between the decision points will therefore be the period of time required for the rotatable shaft to rotate by 45 degrees, which is inversely proportional to the speed of rotation of the rotatable shaft.

At each decision point, the motor controller reads 306 the displacement demand (Demand) received from the transmission controller. The controller then calculates 308 Sigma (k) = Error (k) plus the displacement demand (Demand). Next, the status of the cylinder which is being considered is checked 310. This is carried out with reference to the database 162, 164 of cylinder data. If it is found that the cylinder is deactivated (for example because it is broken), no further action is taken for that cylinder. The method then repeats from step 304 once the decision point is reached for the next cylinder.

Alternatively, if it is found that the cylinder has not been disabled, then Sigma (k) is compared 312 with a volume of fluid to be displaced by the cylinder. This value, VOL, may simply be the maximum volume of working fluid displaceable by the cylinder, when the only options being considered are an inactive cycle with no net displacement or a full displacement active cycle in which the maximum displacement of working fluid by the cylinder is selected. However, VOL may in some circumstances be less than this maximum displacement, for example, where it is desired to carry out a partial cycle, in which only part of the maximum displacement of the cylinder is displaced.

If Sigma (k) is greater than VOL then it is determined that cylinder will undergo an active cycle, displacing a volume of working fluid equal to VOL. Alternatively, if Sigma (k) is not greater than VOL then it is determined that cylinder will be inactive on its next cycle of cylinder working volume, and will have a net displacement of zero.

Control signals are then sent to the low and high pressure valves for the cylinder under consideration to cause the cylinder to undergo an active or inactive cycle, as determined.

This step effectively takes into account the displacement demand (Demand), and the difference between previous values of the displacement demand (Demand) and previous net displacements (Displacement (k)) determined by the controller (in this case, in the form of the stored error), and then matches the time averaged net displacement of working fluid by the cylinders to the time averaged displacement represented by the displacement demand (Demand) by causing a cylinder to undergo an active cycle in which it makes a net displacement of working fluid, if Sigma (k) exceeds the volume of a displacement 314. In that case, the value of the displacement error (Error (k)) is set as Sigma (k) minus the displacement by the active cylinder (Displacement (k)).

The value of the displacement error (Error (k)) (160) is then updated, and Error (k+1) is set to Sigma (k) minus the determined displacement (Displacement (k)). The procedure restarts from step 304 when the decision point is reached for the next cylinder (k+1).

It can therefore be seen that the displacement error variable (Error (k)) (160) maintains a record of a difference between the displacement which has been demanded, and the displacement which has actually occurred in suitable units. On each cycle, the demanded displacement is added to the displacement error value, and the actual selected displacement is subtracted. Effectively, an active cycle takes place whenever the displacement error plus the requested displacement demand exceeds a threshold, in this case VOL.

Accordingly, on each execution of the displacement determination algorithm, the displacement error value (Error (k)) is updated by adding the by the displacement demand (Demand) and subtracting the net displacement of working fluid which is determined during execution of the algorithm (Displacement (k)).

In this way, the motor controller stores an accumulated displacement demand error (Error (k) which is updated each time the displacement determination algorithm is executed by adding the displacement demand (Demand), and the displacement determination algorithm takes into account the difference between the accumulated displacement demand and the accumulated displacement by causing there to be active cycles each time Sigma (k) exceeds a threshold.

One skilled in the art will appreciate that the effects of this displacement determination algorithm can be obtained in several ways. For example, rather than subtracting the determined displacement (Displacement (k)) from the displacement error (Error (k)), it would be possible to sum the volume of working fluid which has been demanded (Accumulated Demand (k)), and the volume of working fluid which has been displaced (Accumulated Displacement (k)), over a period of time, and determine the displacement of individual cylinders to keep the two evenly matched, for example by selecting an active cycle every time Accumulated Demand (k) minus Accumulated Displacement (k) exceeded a threshold (VOL).

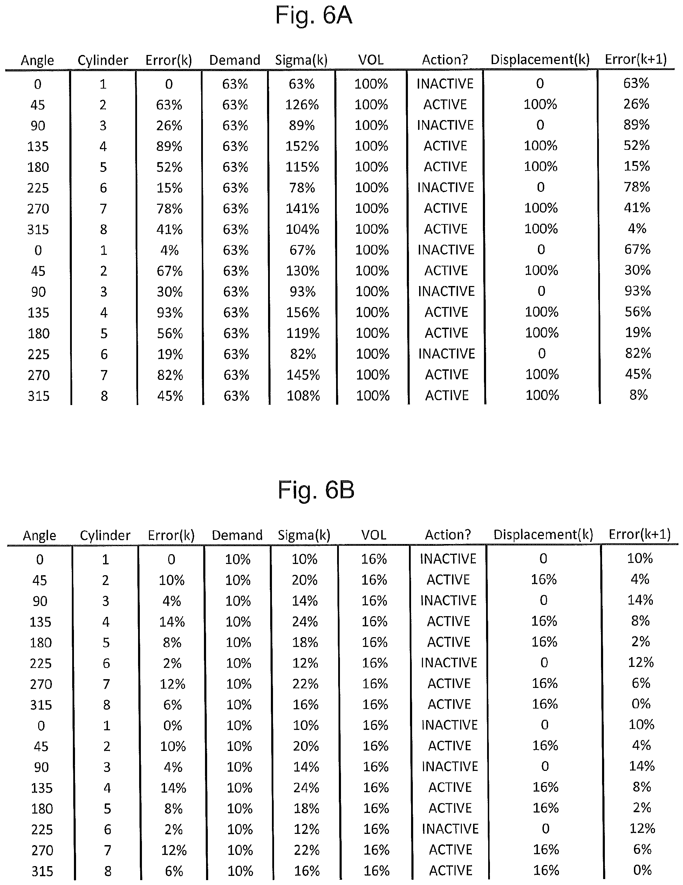

Figure 6A is a table showing an example of the variation in Error (k) and Sigma(k), and the decisions made for each cylinder in an example with eight cylinders equally spaced around a single lobe cam, where all of the active cycles have a displacement equal to the maximum displacement possible by a cylinder, and where there is a constant demand of 63% of the maximum cylinder displacement. Figure 6B is another example, with the demand of 10%, when VOL = 16%, and so the volume displaced by each cylinder during an active cycle is 16% of the maximum available displacement.

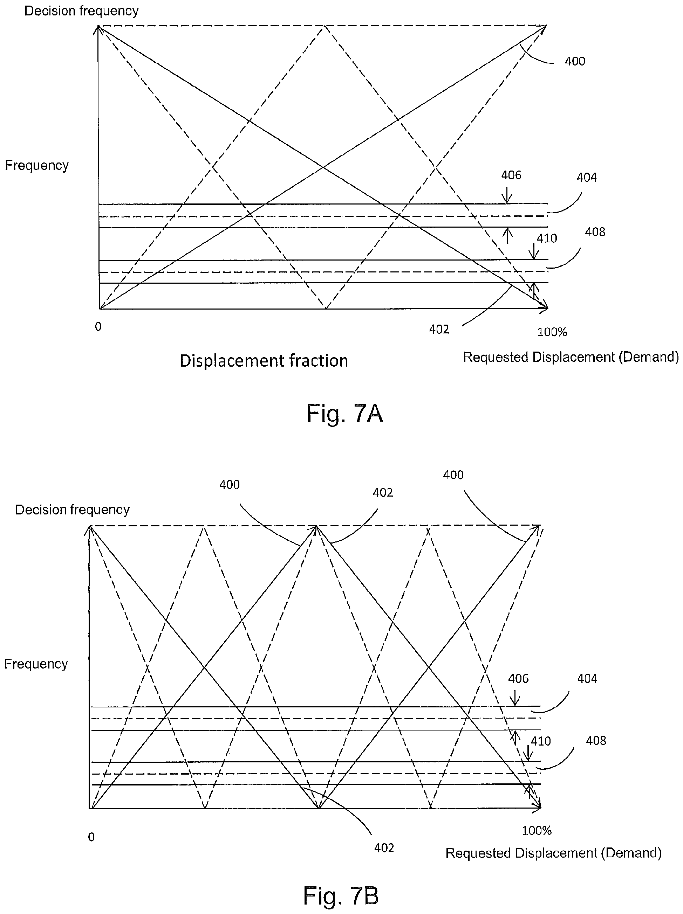

Figure 7A is a schematic diagram showing frequency relationships between selected intensity peaks in the frequency spectrum of the pattern of active and inactive cycles of cylinder working volume and the requested displacement of the hydraulic pump, or hydraulic motor, expressed as a proportion of the maximum displacement of the pump or motor (per revolution of the rotatable shaft). As requested displacement (x axis) increases, the frequency (y axis) of the selection of cylinders to carry out active cycles (the fundamental frequency of cylinders carrying out active cycles) 400 increases linearly, and reaches the frequency of cylinder selection decisions when the requested displacement reaches its maximum. Figure 7A also illustrates the frequency 402 of the selection of cylinders to carry out inactive cycles. It will be seen that this decreases from the frequency of cylinder selection decisions to zero as the requested displacement increases from zero to 100% of the maximum displacement of the hydraulic pump or motor. The actual relationship between the frequencies of selected vibrations and requested displacement may be more complex. For example, Figure 7A assumes that all cycles are either active cycles in which 100% of the maximum displacement of any individual cylinder is displaced or inactive cycles in which no net displacement of working fluid is made. In practice, the graph would appear different if there was variation in the amount of working fluid displaced between active cycles.

These fundamental frequency of active cycles of cylinder working volume and the fundamental frequency of inactive cycles of cylinder working volume are each the frequency of intensity peaks in the frequency spectrum of the pattern of active and inactive cycles of cylinder working volume. Harmonics of these fundamental frequencies may also generate intensity peaks in the said frequency spectrum.

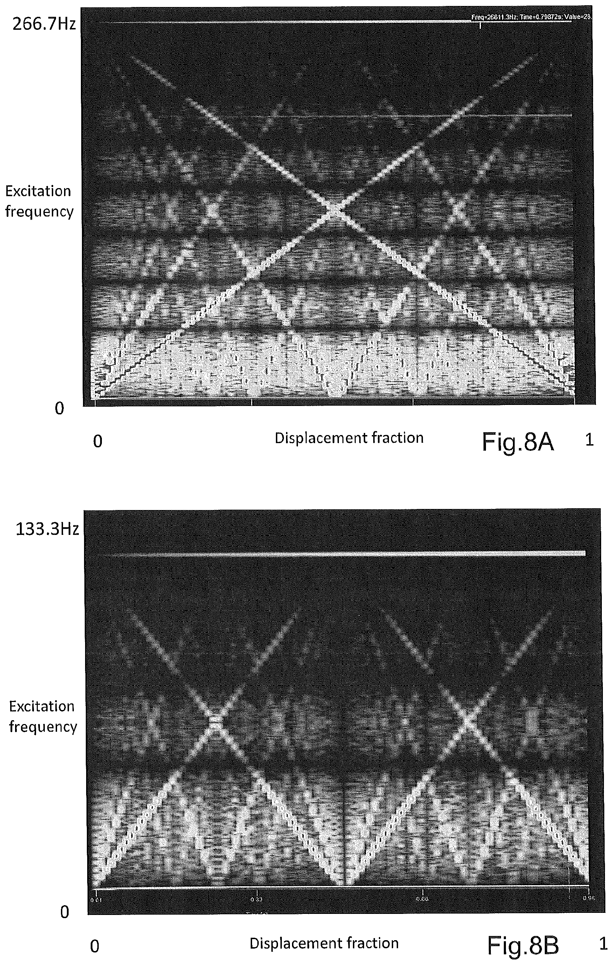

Figure 8A shows calculated frequency spectrum data for the case of a machine having 16 cylinders in total in the form of two banks of eight cylinders which are equally spaced (by 45°), where the two banks are offset by 22.5° and a speed of rotation of the rotatable shaft of 1000rpm. There are cylinders at 16 unique phases of cylinder working volume. The intensity of frequency components of the frequency spectrum is shown by varying shading and intensity peaks can be seen. In this example, the fundamental frequency of cylinder selection decisions is therefore 1000 x 16 / 60 = 266.7Hz and it can be seen that as the displacement fraction (i.e. the proportion of maximum displacement per rotation of the rotatable shaft, typically dictated by the displacement demand signal) (x axis) increases from 0 to 1, the intensity peak indicative of the fundamental frequency (excitation frequency, y axis) of active cycles has increased linearly from 0 to 266.7Hz, and the fundamental frequency of inactive cycles has decreased linearly from 266.7Hz to 0.

Figure 7B illustrates the corresponding variation in the frequency of cylinders carrying out active cycles and the frequency of cylinders carrying out inactive cycles if there is some redundancy in cylinders, such that for each cylinder, there is one other cylinder which is operated in substantially the same phase. This might arise if the cam has two lobes (i.e. two maxima and two minima of distance from the axis of rotation), or if there are two banks of cylinders, driven by identical in-phase cams, receiving working fluid from and delivering working fluid to the same source and sink. In this case, it can be seen that the frequency of the cylinders carrying out active cycles reaches the decision frequency at 50% (100% divided by the number of cylinders having the same phase, the redundancy) at which point, one of each pair of cylinders having the same phase is selected at each decision point and the frequency of cylinders carrying out active cycles again increases from zero as displacement increases, as the proportion of decision points when two cylinders are selected increases. The frequency of selection of inactive cycles varies correspondingly, and the sum of the frequency of selection of active cycles and the frequency of selection of inactive cycles is always the same, for a given cylinder selection frequency.

Figure 8B corresponds to Figure 8A except that the data relates to a machine with 16 cylinders in two banks of eight equally spaced cylinders (45° apart), where there is no offset between banks and so each cylinder is in phase throughout cycles of cylinder working volume with a corresponding cylinder in the other bank. There is therefore a redundancy of 2 and so there are only cylinders at 8 unique phases. Again the speed of rotation is 1000rpm. As cylinder selection decisions are made for two cylinders at once, the frequency of decisions is half that of Figure 8A, i.e. 133.3Hz. As the displacement fraction increases from 0 to 0.5, the number of cylinders selected to undergo active cycles at each decision is either zero or one, with the proportion of decisions in which one cylinder is selected to undergo an active cycle increasing linearly from 0 to 100%. Accordingly, the fundamental frequency of active cycles increases linearly from 0 to 133.3Hz. Then, when the displacement fraction is 0.5, the fundamental frequency of active cycles drops to zero. This is because at that displacement fraction, every time a decision is made as to how many of the two cylinders which are being considered should undergo an active cycle, the decision is one cylinder and so there is no variation which might generate resonances. As the displacement fraction increases from 0.5 to 1, the proportion of decisions which result in two cylinders carrying out active cycles increases linearly from 0 to 100% and so the fundamental frequency of active cycles again increases linearly from 0 to 133.3Hz. The fundamental frequency of inactive cycles equals 133.3Hz minus the fundamental frequency of active cycles.

With reference to Figures 7A and 7B, the hydraulic transmission controller is programmed to avoid the generation of a pattern of active and inactive cycles of cylinder working volume having a frequency spectrum with an intensity peak at a frequency equal to the natural resonant frequency of the tower 404, or, indeed, within a band 406 extending either side of this natural frequency. The hydraulic transmission also avoids the generation of a pattern of active and inactive cycles of cylinder working volume having a frequency spectrum with an intensity peak at a frequency corresponding to the natural resonant frequency of the blades 408, or, indeed, within a band 410 extending either side of this frequency. The hydraulic transmission may also avoid the generation of a pattern of active and inactive cycles of cylinder working volume having a frequency spectrum with intensity peaks at resonant frequencies of other components, for example torsional vibration modes of the drive shaft 14. The frequency with which cylinders are selected to carry out either active or inactive cycles is linearly proportional to the speed of rotation of the rotatable shaft of the pump or motor. Accordingly, the frequency of selection of cylinders to carry out active cycles, or to carry out inactive cycles, scales linearly with the speed of rotation of the rotatable shaft. However, unlike the intensity peaks in the frequency spectrum of the pattern of active and inactive cycles of cylinder working volume, the resonant frequency of the tower, or the blades, or most other components is constant, and does not vary with the speed of rotation of the rotatable shaft. Accordingly, this means that the values of the requested displacement, which would cause the fundamental frequency of cylinders carrying out active cycles 400, or the fundamental frequency of cylinders carrying out inactive cycles 402 to fall within either of the undesirable frequency bands 406, 410 will vary with their speeds of rotation of the rotatable shaft.

As well as the fundamental frequency with which the cylinders carry out active cycles or carry out inactive cycles, each of which leads to a corresponding peak in the frequency spectrum of patterns of active and inactive cycles of cylinder working volume, undesirable vibrations may arise from harmonics of these frequencies, or other frequencies which are a linearly related to requested displacement (at least within defined ranges) and these harmonics are also shown in Figures 8A and 8B.

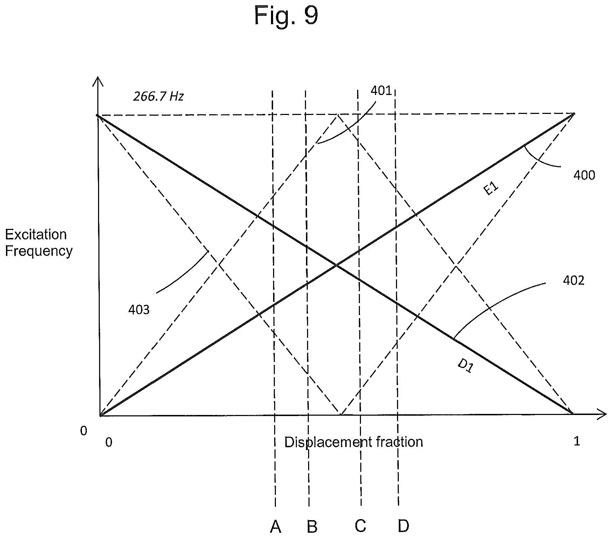

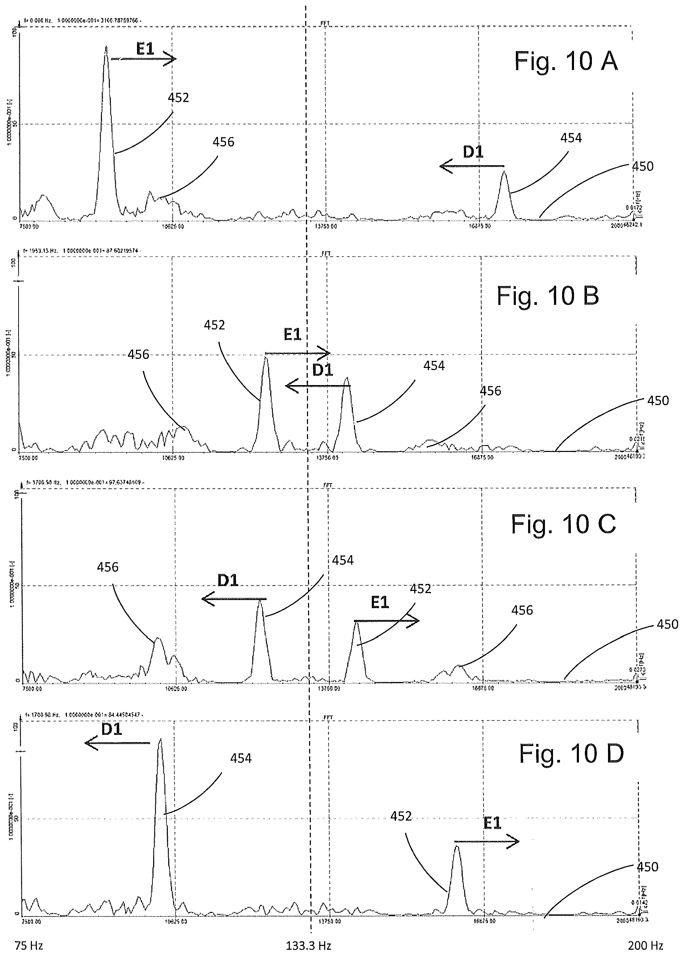

Figures 9 and 10 provide a further illustration of the variation in the frequency of intensity peaks 452, 454, 456 of the frequency spectrum 450 of the pattern of active and inactive cycles of cylinder working with displacement fraction. Figures 10A through 10D show the frequency spectrum at displacement fractions A, B, C and D of Figure 9. The fundamental frequency of active cycles shown as E1 and the fundamental frequency of inactive cycles shown as D1 are complementary

The controller is programmed to avoid the frequency of selection of active cycles or the frequency of selection of inactive cycles, or other vibration frequencies which are related there too (e.g. harmonics) falling within the undesirable frequency bands 406, 410. This can be achieved in several ways:

### Example 1

The controller of the hydraulic transmission may modify the displacement which is requested of the hydraulic pump or the hydraulic motor as appropriate so that the frequency of the respective vibrations falls outside of the undesirable frequency bands. Typically, this would be achieved by calculating desired requested displacements, and then commanding the pump or motor, as appropriate, to make a higher, or lower displacement than was calculated, to keep the frequency of the undesirable vibrations outside of the excluded frequency bands. This may be achieved using the jump-up/jump-down method in which if the calculated requested displacement is increased until it enters an excluded band, it will after a period of time jump to the requested displacement which would lead to generation of a pattern of active and inactive cycles having a frequency spectrum in which the respective intensity peak was at a frequency just above the upper frequency limit of the applicable excluded band. Similarly, as the requested displacement decreased into an excluded band, the displacement requested of the hydraulic pump or motor would jump to the displacement which would lead to the frequency of the corresponding intensity peak being at the bottom end of the excluded band.

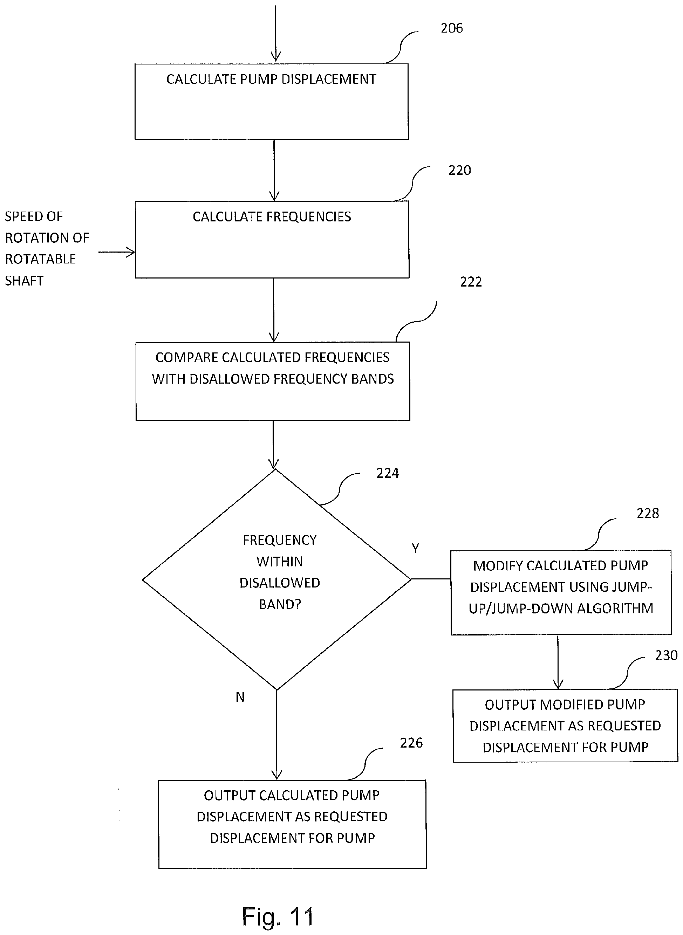

During operation, the controller calculates the requested pump and motor displacement by the method of Figure 4. For each of the pump and the motor, the controller then calculates one or more frequencies of intensity peaks which will result from the pattern of active and inactive cycles of cylinder working volume which will arise from the calculated displacement. The calculated frequencies may, for example, be the frequency of the cylinders to carrying out active cycles or carrying out inactive cycles, or harmonics or other linear functions thereof. Figure 11 illustrates an additional step which is carried out during the operating procedure of Figure 4, after the step of calculating 206 the pump displacement 206. Once the pump displacement has been calculated, the frequency of various intensity peaks in the frequency spectrum of the pattern of active and inactive cycles of cylinder working volume which will be generated if the pump is instructed to carry out the calculated pump displacement is then calculated 220. This step requires knowledge not only of the calculated pump displacement value, but also the speed of rotation of the rotatable shaft, as the relevant frequencies are proportional to the speed of rotation of the rotatable shaft for a given sequence of cylinders carrying out active or inactive cycles. The frequencies of intensity peaks which are calculated typically include at least the fundamental frequency of active cycles of cylinder working volume and the fundamental frequency of inactive cycles of cylinder working volume. A number of harmonics may also be calculated, for example, a second harmonic having double the frequency of the corresponding fundamental frequency. The frequency of other intensity peaks in the frequency spectrum, which are known to potentially generate damaging resonances, may also be calculated, for example 2.5 times the fundamental frequency of active cycles, or 2.5 time the fundamental frequency of inactive cycles.

In the next step 222, the calculated frequencies of intensity peaks are then compared with the undesirable frequency bands 406, 410. It is then determined 224 whether any of these calculated frequencies falls within one of the undesirable bands. If none of the calculated frequencies fall within an undesirable band, then the calculated pump displacement valve is transmitted to the pump as the requested displacement signal. Alternatively, if it is found that one of the frequencies is within an undesirable frequency band, then the controller modifies the calculated pump displacement value using the jump-up/jump-down method, or any other method selected to keep the calculated frequencies of intensity peaks which will result from the pump implementing the calculated pump displacement out of the disallowed bands, for example selecting a requested displacement which is nearest the displacement which would lead to the frequency of the relevant intensity peak being at the bottom of the relevant undesirable frequency band, and the requested displacement which would lead to the frequency of the relevant intensity peak being at the top of the relevant undesirable frequency band. The modified pump displacement is then transmitted to the pump as the requested displacement.

Because the hydraulic transmission has several variables, including instantaneous pump displacement, instantaneous motor displacement, and high pressure working fluid line pressure, which can be varied over time, it does not matter that there is a small difference between the displacement requested of the hydraulic pump or motor and the ideal displacement which was initially calculated. The hydraulic transmission controller can later amend the requested displacement to compensate. Some hysteresis may be built in, to avoid excessively rapid changes in requested displacement due to the avoidance of certain excluded frequency bands.

In practice, the controller may adopt a more complex algorithm. For example, it may allow some of the calculated intensity peaks to remain within undesirable frequency bands, but only for a limited period of time.

In this example, in order to calculate the frequency of intensity peaks, it is only necessary to know the calculated pump or motor displacement and the speed of rotation of the relevant rotatable shaft. Provided that the algorithm of Figure 5 is used to select the displacement of each cylinder on each cycle of cylinder working volume, Figures 7A and 7B should apply. However, the frequency of intensity peaks more generally depends on the precise pattern of cylinders carrying out active and inactive cycles, and will also be affected by any variation in the volume of working fluid displacement by individual cylinders from one active cycle of cylinder working volume to the next. In these cases, the frequency of intensity peaks can be calculated by other means such as carrying out a frequency domain analysis of a predicted variation in total working fluid flow rate arising from a pattern of active and inactive cycles over time.

### Example 2

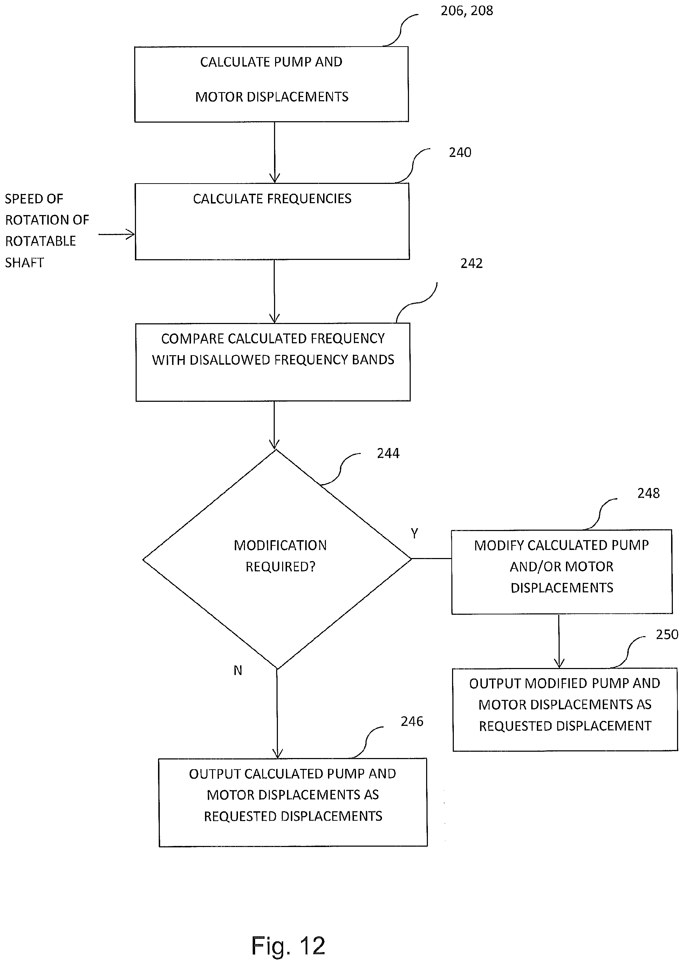

In a second example, illustrated in Figure 12, both the pump and motor displacement are calculated by the method of Figure 4. The frequency of intensity peaks in the frequency spectrum of the pattern of active and inactive cycles of cylinder working volume are calculated 240 for both the pump and the motor, taking into account the calculated pump and motor displacements and the speed of rotation of the rotatable shafts of both the pump and the motor respectively. Again, the frequency of the calculated intensity peaks are compared 242 with undesirable frequency bands, which can be different for the pump and the motor.

It is then determined 244 whether some modification should be made to the calculated pump and motor displacements. If none of the calculated frequencies of intensity peaks fall within undesirable frequency bands, and then the calculated pump and motor displacement are output 246 as the requested displacement for the pump and the motor, without modification.

However, if it instead determined that the frequency of one or more of the intensity peaks falls within an undesirable frequency band, a decision may be made 248 to modify operating parameters of the hydraulic transmission, and the requested displacement of the pump and the motor are then modified and output 250 to implement the desired modification to operating parameters.

There are a number of different ways in which the pump and motor displacement may be modified to change the operating parameters of the hydraulic transmission, for example, a decision may be made to increase or decrease the speed of rotation of the rotatable shaft of the pump and/or motor as appropriate, so that the calculated frequencies of intensity peaks do not remain within one of more undesirable frequency bands. However, other modifications are possible, for example, a decision can be made to increase or decrease the pressure in the high pressure working fluid line. Increasing the pressure in the high pressure working fluid line has the effect of reducing the displacement required of the hydraulic pump to generate a given torque in the turbine drive shaft 14, and therefore a given torque on the wind turbine. A decrease in pressure has the opposite effect. Changes in the pressure in the high pressure working fluid line can also affect the displacement required by the hydraulic motor to develop a desired torque in a generator drive shaft 20. Accordingly, changing the pressure in the high pressure working fluid line can in some circumstances avoid the frequency of one or more intensity peaks in the frequency spectrum of the pattern of active and inactive cycles of cylinder working volume remaining within one or more ranges of undesirable frequencies. There may be a short delay while a change in high pressure working fluid line pressure has a desired effect, although feed-forward algorithms may be used to more rapidly change the displacement of the hydraulic pump or hydraulic motor. In order to increase the pressure in the high pressure working fluid line, the requested displacement for the pump (volume per second) is maintained at a value which is greater than the requested displacement for the motor (volume per second) for a period of time. To reduce the pressure in the high pressure working fluid line, the requested displacement (volume per second) for the pump is maintained below the requested displacement (volume per second) for the motor, for a period of time.

### Example 3

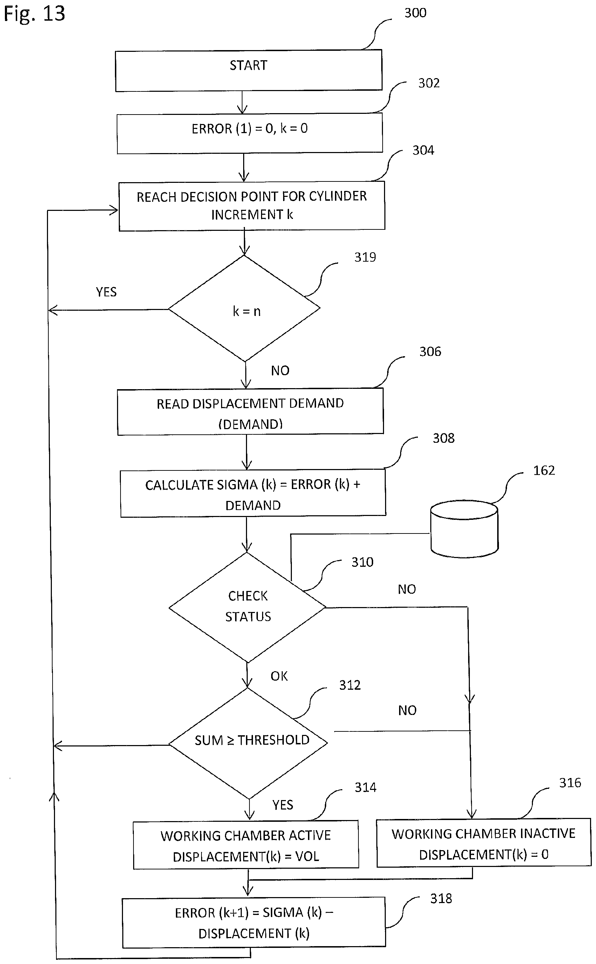

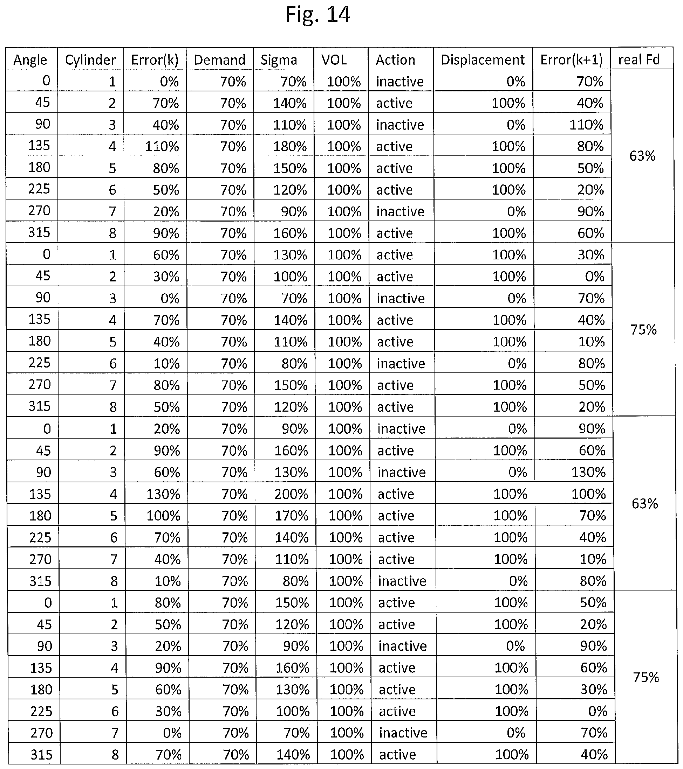

In a third example, when the controller determines that the frequency of an intensity peaks in the frequency spectrum of the pattern of active and inactive cycles of cylinder working volume will fall within an undesirable frequency band unless action is taken, a decision is made to skip one or more cylinders, typically the same one or more cylinders on each rotation of the rotatable shaft. The skipped one or more cylinders undergo inactive cycles and not active cycles on each successive cycle, while the respective intensity peak would otherwise falls within the respective undesirable frequency band. This is illustrated in the flow chart of Figure 13 which corresponds to the procedure of Figure 5 except that each time cylinder n is considered 319, the cylinder always undergoes an inactive cycle. Figure 14 shows the effect on the displacement during each cycle of cylinder working volume, when the cylinder at an angle of 90° is skipped (and is automatically inactive) on each rotation of the rotatable shaft. This allows Error(k+1) to sometimes exceed 100 (the accumulated error which would usually trigger an active cycle in this configuration) without an active cycle being undertaken.

This has the effect that the net displacement alternates between a slightly higher displacement than is indicated by the requested displacement and a slightly lower displacement than is indicated by the requested displacement, while still providing the requested displacement averaged over a period of time. As a result, the intensity peak which would otherwise fall within the undesirable frequency band is split into at least two intensity peaks, at least one of which is at a higher frequency (typically at the top of or above the undesirable frequency band) and another is at a lower frequency (typically at the lower end of or below the undesirable frequency band).

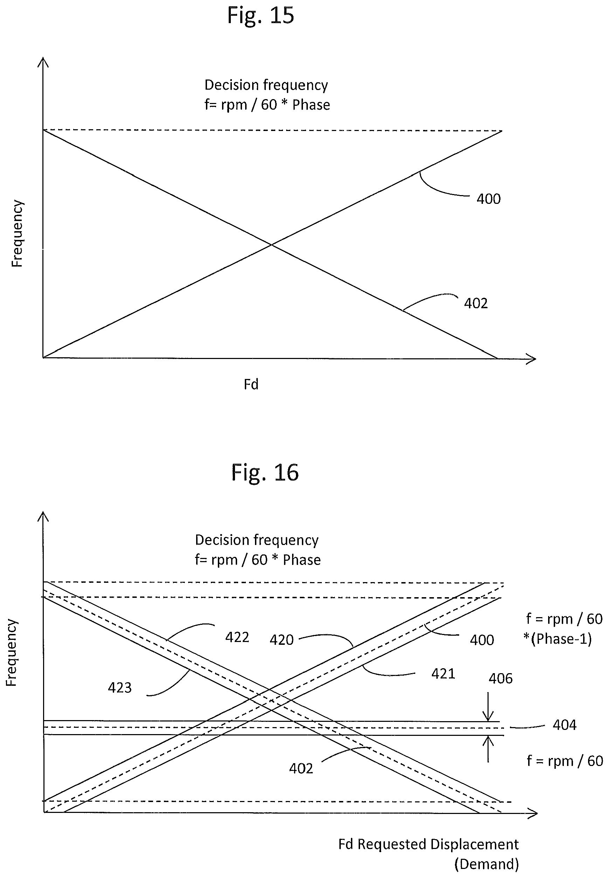

This effect on the frequency of intensity peaks is shown in Figures 15 and 16. Figure 15 illustrates the fundamental frequency of active cycles 400 and the fundamental frequency of inactive cycles 402, each of which corresponds to the frequency of an intensity peak when the algorithm of Figure 5 is executed repetitively. Figure 16 illustrates the effect on the frequency of the corresponding intensity peaks of controlling the pattern of active and inactive cycles to skip one or more cylinders by the procedure of Figure 13. When the procedure of Figure 13 is operated, instead of generating an intensity peak at the fundamental frequency of active cycles 400, an intensity peak at a higher frequency 420 and a lower frequency 421 are instead generated. Similarly, instead of generating an intensity peak at the fundamental frequency of inactive cycles, an intensity peak at a higher frequency 422 and a lower frequency 423 are instead generated.

Accordingly, the controller can determine whether normal execution of the algorithm of Figure 5 would generate intensity peaks in a range of undesirable frequencies (e.g. range 406) and can instead skip one or more cylinders. The controller can determine which one or more cylinders to skip by using a look up table or carrying out a simulation of the effect of skipping different cylinders, for example, by carrying out frequency domain analysis (e.g. Fast Fourier Transform analysis) of the patterns of active and inactive cycles which will arise if one or more cylinders are skipped.

Cylinders may be skipped by causing the same one or more cylinders to undergo inactive cycles on successive cycles of cylinder working volume.

### Example 4

In a fourth example, the controller again determines when the frequency of an intensity peak in the frequency spectrum of the pattern of active and inactive cycles of cylinder working volume will fall within an undesirable frequency band unless action is taken. However, in this example, the controller varies the timing of active control of the electronically controlled valves 118, 126 relative to cycles of cylinder working volume to reduce the intensity of one or more intensity peaks within a range of undesirable frequencies.

For example, during a pumping cycle, it may be that the precise time, within cycles of cylinder working volume, at which the low pressure valve 118 is closed to cause pressurised working fluid to be diverted to the high pressure line through high pressure valve 126 is delayed (i.e. is longer in time after bottom dead centre), reducing the total volume of working fluid displaced during an active cycle. During a motoring cycle it may be that the precise time, within cycles of cylinder working volume, that the high pressure valve 126 is closed to stop working fluid being received from the high pressure line and the low pressure valve 118 is opened are brought forward (i.e. shorter in time after top dead centre), again reducing the total volume of working fluid displaced during an active cycle.

Accordingly, by varying the timing of the valve control signals, and therefore the timing of the opening and/or closing of the high and/or low pressure valves, the intensity of intensity peaks of the frequency spectrum of the pattern of active and inactive cycles of cylinder working volume can be varied, to thereby attenuate unwanted frequencies which could cause resonances.

Although in the examples above, the ranges of undesirable frequencies were constant and independent of the speed of rotation of the rotatable shaft, in some embodiment, one or more of the ranges of undesirable frequencies will be variable. For example, in the case of the hydraulic motor being used to drive an actuated arm of an excavator, a resonant frequency (and so the range of undesirable frequencies centred on the resonant frequency) may depend on the position of the arm. If the motor drives a ram, a resonant frequency (and so the range of undesirable frequencies centred on the resonant frequency) will depend on the extent to which the ram is extended. In some cases, one or more of the resonant frequencies (and therefore one or more of the ranges of undesirable frequencies) will depend on one or more measured parameters which are independent of the speed of rotation of the rotatable shaft, for example, they may depend on the position of a plurality of actuators, as measured by one or more position sensors. In some cases, one or more of the resonant frequencies (and therefore one or more of the ranges of undesirable frequencies) will depend on, but not be proportional to, the speed of rotation of the rotatable shaft. For example, in the wind turbine generator, one or more resonant frequencies of the blades (and therefore one or more of the ranges of undesirable frequencies) will increase as the speed of rotation of the rotatable shaft increases (and so the blades become more stiff) but the change in frequency is not proportional to the rate of rotation of the rotatable shaft.

In some cases, all of the ranges of undesirable frequencies are fixed and can be stored in memory. However, in when one or more resonant frequencies may vary, a resonance determining module 159 may be employed to determine one or more of the ranges of undesirable frequencies comprising varying resonant frequencies. The resonance determining module may therefore process data from one or more sensors (e.g. one or more accelerometers, pressure sensors, strain gauges, actuator position sensors etc.). As mentioned above, in some but not all cases, the resonance determining module will take into account the speed of rotation of the rotatable shaft. The resonance determining module might use a look up table, or algorithm to determine resonant frequencies and/or range of undesirable frequencies from the one or more measurements from sensors.

The resonance determining module might be operable to identify one or more resonant oscillations by analysing a signal (e.g. the speed of rotation of the rotatable shaft, the pressure in the high pressure fluid line, the signal from an accelerometer or strain gauge) and carry out a frequency analysis to identify a resonance. For example, the resonance determining module might carry out Fast Fourier Transform analysis on the signal from an accelerometer or strain gauge attached to a part of a wind turbine generator (e.g. to the tower, hub or a blade) and identify intensity peaks in the resulting frequency spectrum. Once one or more frequencies have been identified, the resonance determining module can then define a said range of undesirable frequencies around the identified resonance.

Further variations and modifications may be made within the scope of the invention herein disclosed.

### List of Features

- 1: Wind turbine generator
- 2: Nacelle
- 4: Tower
- 6: Turbine
- 8: Blades
- 10: Hydraulic transmission
- 12: Hydraulic variable displacement pump
- 14: Drive shaft
- 16: Hydraulic variable displacement motor
- 18: Electricity generator
- 20: Generator drive shaft
- 22: Contactor
- 24: Tank
- 26: Low pressure working fluid line
- 28: High pressure working fluid line
- 30: Oleo-pneumatic accumulator
- 32: Transmission controller
- 34: Anemometer
- 36: Accelerometer
- 38: Accelerometer
- 40: Processor
- 42: Data storage
- 100: Cylinders
- 102: Cylinder working volume
- 106: Pistons
- 108: Rotatable shaft
- 110: Eccentric cam
- 112: Shaft position and speed sensor
- 114: Signal line
- 116: Machine controller
- 118: Low pressure valves (electronically controlled valves)
- 120: Low pressure manifold
- 122: High pressure manifold
- 124: Low pressure valve control line
- 126: High pressure valves (electronically controlled valves)
- 128: Pressure relief valve
- 132: High pressure valve control line
- 150: Processor
- 152: Bus
- 154: Memory
- 156: Input-output port
- 158: Program
- 159: Resonance determining module
- 160: Variables (including ERROR)
- 162: Database of data concerning each cylinder
- 163: Data concerning angular position of each cylinder
- 164: Data concerning whether each cylinder is disabled
- 165: Data being number of times each cylinder has undergone an active cycle
- 166: Shaft position signal
- 168: Measurement of pressure
- 200: Step of receiving input signals
- 202: Step of determining target torque
- 204: Step of calculating pump displacement
- 206: Step of calculating motor displacement
- 220: Calculating frequency of intensity peaks in the frequency spectrum of the pattern of active and inactive cycles of cylinder working volume
- 222: Comparing the frequency of calculated intensity peaks in the frequency spectrum of the pattern of active and inactive cycles of cylinder working volume
- 224: Determining whether the frequency of calculated intensity peaks in the frequency spectrum of the pattern of active and inactive cycles of cylinder working volume falls within undesirable frequency bands
- 240: Calculating the frequency of intensity peaks in the frequency spectrum of the pattern of active and inactive cycles of cylinder working volume
- 242: Comparing calculated frequencies of intensity peaks in the frequency spectrum of the pattern of active and inactive cycles of cylinder working volume with undesirable frequency bands
- 244: Determining whether to modify operating parameters
- 246: Output requested displacement
- 248: Modify calculated displacements
- 250: Output modified requested displacements
- 300: Step of procedure beginning
- 302: Step of setting ERROR to zero
- 304: Step of reaching decision point
- 306: Step of reading request motor displacement
- 308: Step of calculating SIGMA
- 310: Step of checking status
- 312: Comparison step
- 314: Step of setting displacement
- 316: Step of setting displacement to zero
- 318: Step of updating ERROR
- 400: Fundamental frequency of cylinders carrying out active cycles (which generates an intensity peaks in the frequency spectrum of the pattern of active and inactive cycles of cylinder working volume at a corresponding frequency)
- 402: Fundamental frequency of cylinders carrying out inactive cycles (which generates an intensity peaks in the frequency spectrum of the pattern of active and inactive cycles of cylinder working volume at a corresponding frequency)
- 404: Resonant frequency of tower
- 406: Frequency band
- 408: Resonant frequency of blades
- 410: Frequency band
- 420: Frequency of intensity peak (increased frequency)
- 421: Frequency of intensity peak (reduced frequency)
- 422: Frequency of intensity peak (increased frequency)
- 423: Frequency of intensity peak (reduced frequency)
- 450: Frequency spectrum of pattern of active and inactive cycles of cylinder working volume
- 452: Intensity peak due to fundamental frequency of active cycles (also E1)
- 454: Intensity peak due to fundamental frequency of inactive cycles (also D1)
- 456: Intensity peak due to harmonic

## Claims

1. A hydraulic transmission (10), comprising:
a variable displacement hydraulic pump (12),
a variable displacement hydraulic motor (16),
a drive shaft (14) coupled to the hydraulic pump (12), for driving the hydraulic pump (12), and
an output shaft (20) coupled to the hydraulic motor (16), for coupling to a load (18),
wherein at least one of the hydraulic pump (12) and the hydraulic motor (16) comprises:
a rotatable shaft (20),
a shaft sensor (112) which measures the position or speed of rotation of the rotatable shaft (20),
at least one cam (110) having at least one lobe,
a plurality of cylinders (100) having working volumes (102) which vary cyclically with rotation of the rotatable shaft (20),
a low pressure working fluid line (120) and a high pressure working fluid line (122),
a plurality of valves (118,126) regulating the flow of working fluid between each cylinder (100) and the low and high pressure working fluid lines (120,122), at least one said valve (118, 126) associated with each cylinder being an electronically controlled valve,
wherein the hydraulic transmission (10) comprises control means (32) configured to generate command signals to actively control the said electronically controlled valves to thereby determine whether each cylinder (100) carries out an active cycle in which there is a net displacement of working fluid or an inactive cycle in which there is no net displacement of working fluid, for each cycle of cylinder working volume,
wherein the fundamental frequency of cylinders carrying out active cycles (400) or the fundamental frequency of cylinders carrying out inactive cycles (402) is proportional to the speed of rotation of the rotatable shaft, and
**characterised in that** the control means (32) is configured to control the hydraulic transmission (10) to avoid the frequency of one or more intensity peaks (400,402,452,454,456) of the frequency spectrum (450) of the pattern of active and inactive cycles of cylinder working volume carried out by the cylinders remaining within one or more ranges of undesirable frequencies (406,410), or to reduce the intensity of one or more said intensity peaks (400,402,452,454,456) within the one or more ranges of undesirable frequencies (406,410), taking into account the speed of rotation of the rotatable shaft (20), the one or more ranges of undesirable frequencies (406,410) comprising one or more resonant frequencies (404,408) of a portion of a machine (4,8), which is part of or in mechanical communication with the hydraulic transmission (10), at least one said resonant frequency not varying proportionately to the speed of rotation of the rotatable shaft,
wherein the control means (32) is configured to calculate a proposed displacement of working fluid by the at least one of the pump (12) and the motor (16), and to calculate (220, 240) the frequency of one or more intensity peaks (400,402,452,454,456) of the frequency spectrum (450) of the pattern of active and inactive cycles of cylinder working volume which would arise if the at least one pump (12) or motor (16) was requested to implement the proposed displacement of working fluid and to compare (222,242) the calculated frequency or frequencies with the one or more ranges of undesirable frequencies (406,410).

2. A hydraulic transmission (10) according to claim 1, wherein the said frequency of one or more intensity peaks (400,402,452,454,456) of the frequency spectrum (450) of the pattern of active and inactive cycles of cylinder working volume comprises the fundamental frequency of cylinders carrying out active cycles (400), or a linear function thereof, or the fundamental frequency of cylinders carrying out inactive cycles (402), or a linear function thereof.

3. A hydraulic transmission (10) according to claim 1, wherein the control means (32) also takes into account one or more signals which determine the pattern of active and inactive cycles of cylinder working volume or which represent the pattern of active and inactive cycles of cylinder working volume.

4. A hydraulic transmission (10) according to claim 1, wherein for a group of cylinders in the plurality of cylinders (100), there is another cylinder within the group of cylinders which has substantially the same working volume (102) throughout cycles of cylinder working volume.

5. A hydraulic transmission (10) according to claim 4, wherein the cylinders (100) in the group of cylinders are in driving relationship with the same ring cam, and the said ring cam has a plurality of lobes, such that for each cylinder (100) in the group of cylinders, there is another cylinder which has substantially the same working volume throughout cycles of cylinder working volume.

6. A hydraulic transmission (10) according to claim 5, wherein the group of cylinders in driving relationship with the same ring cam comprise A cylinders, the ring cam has B lobes and the number of cylinders having substantially the same working volume (102) throughout cycles of cylinder working volume (the redundancy, C) is the greatest common divisor of A and B.

7. A hydraulic transmission (10) according to claim 6, wherein the group of cylinders consists of a number (D, the phase number) of sets of the same number (C, the redundancy) of cylinders having substantially the same working volume throughout cycles of cylinder working volume (102), and the control means (32) is configured to select whether each cylinder (100) in a said set of cylinders should undergo an active or an inactive cycle on a given cycle of cylinder working volume at a single decision point.

8. A hydraulic transmission (10) according to claim 1, wherein the control means (32) is configured to control the hydraulic transmission (10) to avoid the frequency of one or more intensity peaks (400, 402, 452, 454, 456) of the frequency spectrum (450) of the pattern of active and inactive cycles of cylinder working volume remaining within one or more ranges of undesirable frequencies (406,410), taking into account the speed of rotation of the rotatable shaft (20) by increasing or decreasing the proportion of cylinders (100) which carry out active cycles.

9. A hydraulic transmission (10) according to claim 1, wherein the control means (32) controls the hydraulic transmission (10) to avoid the said frequency of one or more intensity peaks (400, 402, 452, 454, 456) in the frequency spectrum (450) of the pattern of active and inactive cycles of cylinder working volume remaining within one or more ranges of undesirable frequencies (406, 410), by one or more of: causing the pressure in the high pressure working fluid line (122) to increase or decrease and causing the speed of rotation of the rotatable shaft (20) to increase or decrease.

10. A hydraulic transmission (10) according to claim 7, wherein the control means (32) is configured to control the hydraulic transmission (10) to avoid the frequency of one or more intensity peaks (400, 402, 452, 454, 456) of the frequency spectrum (450) of the pattern of active and inactive cycles of cylinder working volume remaining within one or more ranges of undesirable frequencies (406, 410), by skipping at least one of the cylinders (100) in the said group of cylinders.

11. A hydraulic transmission (10) according to claim 7, wherein the control means (32) is configured to control the hydraulic transmission (10) to reduce the intensity of one or more intensity peaks (400, 402, 452, 454, 456) of the frequency spectrum (450) of the pattern of active and inactive cycles of cylinder working volume by shifting the timing of at least some of the command signals, relative to the cycles of cylinder working volume.

12. A machine (1) comprising a hydraulic transmission (10) according to claim 1, wherein one or more said ranges of undesirable frequencies (406,410) include one or more resonant frequencies (404,408) which do not vary proportionately to the speed of rotation of the rotatable shaft (108).

13. A machine (1) according to claim 12, wherein the machine is a wind turbine generator (1) having a turbine (6) coupled to the hydraulic pump (12) and comprising a plurality of blades (8), and an electricity generator (18) coupled to the hydraulic motor (16), wherein one or more said ranges of undesirable frequencies (406,410) include one or more of: a resonant frequency of the blades (408), a resonant frequency of the turbine, a resonant frequency of a tower (404) of the wind turbine generator, and a resonant frequency of a drive shaft connecting the turbine to the hydraulic pump.

14. A method of operating a hydraulic transmission (10), the hydraulic transmission comprising:
a variable displacement hydraulic pump (12),
a variable displacement hydraulic motor (16),
a drive shaft (14) coupled to the hydraulic pump (12), for driving the hydraulic pump (12), and
an output shaft (20) coupled to the hydraulic motor (16), for coupling to a load (18),
wherein at least one of the hydraulic pump (12) and the hydraulic motor (16) comprises:
a rotatable shaft (20),
a shaft sensor (112) which measures the position or speed of rotation of the rotatable shaft (20),
at least one cam (110) having at least one lobe,
a plurality of cylinders (100) having working volumes (102) which vary cyclically with rotation of the rotatable shaft (20),
a low pressure working fluid line (120) and a high pressure working fluid line (122),
a plurality of valves (118,126) regulating the flow of working fluid between each cylinder (100) and the low and high pressure working fluid lines (120,122), at least one said valve (118,126) associated with each cylinder being an electronically controlled valve,
wherein the method comprises generating command signals to actively control the said electronically controlled valves to thereby determine the net displacement of working fluid by each cylinder (100) on each cycle of cylinder working volume, wherein the fundamental frequency of cylinders (100) carrying out active cycles (400) or the fundamental frequency of cylinders carrying out inactive cycles (402) is proportional to the speed of rotation of the rotatable shaft, and
**characterised in that** the method comprises controlling the hydraulic transmission so that the frequency of one or more intensity peaks (400,402,452,454,456) in the frequency spectrum (450) of the pattern of active and inactive cycles of cylinder working volume does not remain within one or more ranges of undesirable frequencies (406,410), or so that the intensity of one or more said intensity peaks (400,402,452,454,456) within the one or more ranges of undesirable frequencies (406,410) is reduced, taking into account the speed of rotation of the rotatable shaft (20), the one or more ranges of undesirable frequencies (406,410) comprising one or more resonant frequencies (404,408) of a portion of a machine (4,8), which is part of or in mechanical communication with the hydraulic transmission (10), at least one said resonant frequency not varying proportionately to the speed of rotation of the rotatable shaft,
wherein the method comprises calculating a proposed displacement of working fluid by the at least one of the pump (12) and the motor (16), calculating (220, 240) the frequency of one or more intensity peaks (400,402,452,454,456) of the frequency spectrum (450) of the pattern of active and inactive cycles of cylinder working volume which would arise if the at least one pump (12) or motor (16) was requested to implement the proposed displacement of working fluid and comparing (222,242) the calculated frequency or frequencies with the one or more ranges of undesirable frequencies (406,410).

## Patentansprüche

1. Hydraulikgetriebe (10), umfassend:
eine hydraulische Verstellpumpe (12),
einen hydraulischen Verstellmotor (16),
eine an die hydraulische Pumpe (12) gekoppelte Antriebswelle (14) zum Antreiben der hydraulischen Pumpe (12) und
eine an den hydraulischen Motor (16) gekoppelte Abtriebswelle (20) zum Ankoppeln an eine Last (18),
wobei die hydraulische Pumpe (12) und/oder der hydraulische Motor (16) Folgendes umfasst bzw. umfassen:
eine drehbare Welle (20),
einen Wellensensor (112), der die Position oder
die Drehgeschwindigkeit der drehbaren Welle (20) misst,
wenigstens eine Nockenscheibe (110), die wenigstens einen Nockenbuckel aufweist,
eine Vielzahl von Zylindern (100) mit Arbeitsvolumina (102), die sich mit der Drehung der drehbaren Welle (20) zyklisch verändern,
eine unter Niederdruck stehende Arbeitsmedienleitung (120) und eine unter Hochdruck stehende Arbeitsmedienleitung (122),
eine Vielzahl von Ventilen (118, 126), die den Strom des Arbeitsmediums zwischen jedem Zylinder (100) und den unter Niederdruck und unter Hochdruck stehenden Arbeitsmedienleitungen (120, 122) regeln, wobei wenigstens ein mit jedem Zylinder in Verbindung stehendes Ventil (118, 126) ein elektronisch gesteuertes Ventil ist,
wobei das Hydraulikgetriebe (10) ein Steuermittel (32) umfasst, das so ausgelegt ist, dass es Befehlssignale erzeugt, um die elektronisch gesteuerten Ventile aktiv zu steuern und dadurch zu bestimmen, ob jeder Zylinder (100) einen aktiven Zyklus, in dem eine Nettoverdrängung des Arbeitsmediums erfolgt, oder einen inaktiven Zyklus, in dem keine Nettoverdrängung des Arbeitsmediums erfolgt, für jeden Zyklus des Zylinderarbeitsvolumens ausführt,
wobei die Grundfrequenz der Zylinder, die aktive Zyklen (400) ausführen, bzw. die Grundfrequenz der Zylinder, die inaktive Zyklen (402) ausführen, proportional zu der Drehgeschwindigkeit der drehbaren Welle ist, und
**dadurch gekennzeichnet, dass** das Steuermittel (32) so ausgelegt ist, dass es das Hydraulikgetriebe (10) steuert, um zu verhindern, dass die Frequenz einer oder mehrerer Intensitätsspitzen (400, 402, 452, 454, 456) des Frequenzspektrums (450) des Musters von aktiven und inaktiven Zyklen des Zylinderarbeitsvolumens, die von den Zylindern ausgeführt werden, innerhalb eines oder mehrerer Bereiche von unerwünschten Frequenzen (406, 410) bleibt, oder um die Intensität einer oder mehrerer der Intensitätsspitzen (400, 402, 452, 454, 456) innerhalb des einen oder der mehreren der Bereiche von unerwünschten Frequenzen (406, 410) zu reduzieren, wobei die Drehgeschwindigkeit der drehbaren Welle (20) berücksichtigt wird, wobei der eine oder die mehreren Bereiche von unerwünschten Frequenzen (406, 410) eine oder mehrere Resonanzfrequenzen (404, 408) eines Teils einer Maschine (4, 8) umfassen, die Teil des Hydraulikgetriebes (10) ist oder mit diesem in mechanischer Verbindung steht, wobei wenigstens eine Resonanzfrequenz sich nicht proportional zu der Drehgeschwindigkeit der drehbaren Welle verändert, wobei das Steuermittel (32) so ausgelegt ist, dass es eine vorgeschlagene Verdrängung des Arbeitsmediums durch die Pumpe (12) und/oder den Motor (16) berechnet und dass es die Frequenz einer oder mehrerer Intensitätsspitzen (400, 402, 452, 454, 456) des Frequenzspektrums (450) des Musters von aktiven und inaktiven Zyklen des Zylinderarbeitsvolumens berechnet (220, 240), das entstehen würde, wenn die Pumpe (12) und/oder der Motor (16) aufgefordert würde bzw. würden, die vorgeschlagene Verdrängung des Arbeitsmediums vorzunehmen, und dass es die berechnete Frequenz oder die berechneten Frequenzen mit einem oder mehreren Bereichen von unerwünschten Frequenzen (406, 410) vergleicht (222, 242).

2. Hydraulikgetriebe (10) nach Anspruch 1, wobei die Frequenz der einen oder mehreren Intensitätsspitzen (400, 402, 452, 454, 456) des Frequenzspektrums (450) des Musters von aktiven und inaktiven Zyklen des Zylinderarbeitsvolumens die Grundfrequenz der Zylinder, die die aktiven Zyklen (400) ausführen, oder eine lineare Funktion derselben oder die Grundfrequenz der Zylinder, die die inaktiven Zyklen (402) ausführen, oder eine lineare Funktion derselben umfasst.

3. Hydraulikgetriebe (10) nach Anspruch 1, wobei das Steuermittel (32) außerdem eines oder mehrere Signale berücksichtigt, die das Muster von aktiven und inaktiven Zyklen des Zylinderarbeitsvolumens bestimmen oder die das Muster von aktiven und inaktiven Zyklen des Zylinderarbeitsvolumens darstellen.

4. Hydraulikgetriebe (10) nach Anspruch 1, wobei es für eine Gruppe von Zylindern aus der Vielzahl von Zylindern (100) einen weiteren Zylinder innerhalb der Gruppe von Zylindern gibt, der über die gesamten Zyklen des Zylinderarbeitsvolumens im Wesentlichen das gleiche Arbeitsvolumen (102) aufweist.

5. Hydraulikgetriebe (10) nach Anspruch 4, wobei die Zylinder (100) in der Gruppe von Zylindern sich in einem antreibenden Verhältnis zu der gleichen Ringnocke befinden und die Ringnocke eine Vielzahl von Nockenbuckeln aufweist, und zwar derart, dass es für jeden Zylinder (100) in der Gruppe von Zylindern einen weiteren Zylinder gibt, der über die gesamten Zyklen des Zylinderarbeitsvolumens im Wesentlichen das gleiche Arbeitsvolumen aufweist.

6. Hydraulikgetriebe (10) nach Anspruch 5, wobei die zu der gleichen Ringnocke in einem antreibenden Verhältnis stehenden Gruppe von Zylindern A Zylinder umfasst, die Ringnocke B Nockenbuckel aufweist und die Anzahl von Zylindern, die über die gesamten Zyklen des Zylinderarbeitsvolumens im Wesentlichen das gleiche Arbeitsvolumen (102) aufweisen (die Redundanz, C), der größte gemeinsame Teiler von A und B ist.

7. Hydraulikgetriebe (10) nach Anspruch 6, wobei die Gruppe von Zylindern aus einer Anzahl (D, die Phasenanzahl) von Sets der gleichen Anzahl (C, die Redundanz) von Zylindern, die über die gesamten Zyklen des Zylinderarbeitsvolumens (102) im Wesentlichen das gleiche Arbeitsvolumen aufweisen, besteht, und das Steuermittel (32) so ausgelegt ist, dass es auswählt, ob jeder Zylinder (100) in einem Set von Zylindern einen aktiven oder einen inaktiven Zyklus in einem gegebenen Zyklus des Zylinderarbeitsvolumens an einem einzelnen Entscheidungspunkt durchlaufen sollte.

8. Hydraulikgetriebe (10) nach Anspruch 1, wobei das Steuermittel (32) so ausgelegt ist, dass es das Hydraulikgetriebe (10) steuert, um zu verhindern, dass die Frequenz einer oder mehrerer Intensitätsspitzen (400, 402, 452, 454, 456) des Frequenzspektrums (450) des Musters von aktiven und inaktiven Zyklen des Zylinderarbeitsvolumens innerhalb eines oder mehrerer Bereiche von unerwünschten Frequenzen (406, 410) bleibt, wobei die Drehgeschwindigkeit der drehbaren Welle (20) dadurch berücksichtigt wird, dass der Anteil der Zylinder (100), die die aktiven Zyklen ausführen, erhöht oder verringert wird.

9. Hydraulikgetriebe (10) nach Anspruch 1, wobei das Steuermittel (32) das Hydraulikgetriebe (10) steuert, um zu verhindern, dass die Frequenz einer oder mehrerer Intensitätsspitzen (400, 402, 452, 454, 456) in dem Frequenzspektrum (450) des Musters von aktiven und inaktiven Zyklen des Zylinderarbeitsvolumens innerhalb eines oder mehrerer Bereiche von unerwünschten Frequenzen (406, 410) bleibt, und zwar durch Bewirken, dass sich der Druck in der unter Hochdruck stehenden Arbeitsmedienleitung (122) erhöht oder verringert, und/oder durch Bewirken, dass sich die Drehgeschwindigkeit der drehbaren Welle (20) erhöht oder verringert.

10. Hydraulikgetriebe (10) nach Anspruch 7, wobei das Steuermittel (32) so ausgelegt ist, dass es das Hydraulikgetriebe (10) steuert, um zu verhindern, dass die Frequenz einer oder mehrerer Intensitätsspitzen (400, 402, 452, 454, 456) des Frequenzspektrums (450) des Musters von aktiven und inaktiven Zyklen des Zylinderarbeitsvolumens innerhalb eines oder mehrerer Bereiche von unerwünschten Frequenzen (406, 410) bleibt, indem wenigstens einer der Zylinder (100) in der Gruppe von Zylindern übersprungen wird.

11. Hydraulikgetriebe (10) nach Anspruch 7, wobei das Steuermittel (32) so ausgelegt ist, dass es das Hydraulikgetriebe (10) steuert, um die Intensität einer oder mehrerer Intensitätsspitzen (400, 402, 452, 454, 456) des Frequenzspektrums (450) des Musters von aktiven und inaktiven Zyklen des Zylinderarbeitsvolumens zu reduzieren, indem es die Zeitvorgabe für wenigstens einige der Befehlssignale relativ zu den Zyklen des Zylinderarbeitsvolumens verschiebt.

12. Maschine (1), die ein Hydraulikgetriebe (10) nach Anspruch 1 umfasst, wobei ein oder mehrere Bereiche von unerwünschten Frequenzen (406, 410) eine oder mehrere Resonanzfrequenzen (404, 408) einschließt, die sich nicht proportional zu der Drehgeschwindigkeit der drehbaren Welle (108) verändern.

13. Maschine (1) nach Anspruch 12, wobei es sich bei der Maschine um einen Windkraftturbinengenerator (1) handelt, der eine an die hydraulische Pumpe (12) gekoppelte und eine Vielzahl von Turbinenblättern (8) umfassende Turbine (6) und einen an den hydraulischen Motor (16) gekoppelten Stromgenerator (18) aufweist, wobei ein oder mehrere Bereiche von unerwünschten Frequenzen (406, 410) eine Resonanzfrequenz der Turbinenblätter (408), eine Resonanzfrequenz der Turbine, eine Resonanzfrequenz eines Turms (404) des Windkraftturbinengenerators und/oder eine Resonanzfrequenz einer Antriebswelle einschließt, die die Turbine mit der hydraulischen Pumpe verbindet.

14. Verfahren zum Betrieb eines Hydraulikgetriebes (10), wobei das Hydraulikgetriebe Folgendes umfasst:
eine hydraulische Verstellpumpe (12),
einen hydraulischen Verstellmotor (16),
eine an die hydraulische Pumpe (12) gekoppelte Antriebswelle (14) zum Antreiben der hydraulischen Pumpe (12) und
eine an den hydraulischen Motor (16) gekoppelte Abtriebswelle (20) zum Ankoppeln an eine Last (18),
wobei die hydraulische Pumpe (12) und/oder der hydraulische Motor (16) Folgendes umfasst bzw. umfassen:
eine drehbare Welle (20),
einen Wellensensor (112), der die Position oder
die Drehgeschwindigkeit der drehbaren Welle (20) misst,
wenigstens eine Nockenscheibe (110), die wenigstens einen Nockenbuckel aufweist,
eine Vielzahl von Zylindern (100) mit Arbeitsvolumina (102), die sich mit der Drehung der drehbaren Welle (20) zyklisch verändern,
eine unter Niederdruck stehende Arbeitsmedienleitung (120) und eine unter Hochdruck stehende Arbeitsmedienleitung (122),
eine Vielzahl von Ventilen (118, 126), die den Strom des Arbeitsmediums zwischen jedem Zylinder (100) und den unter Niederdruck und unter Hochdruck stehenden Arbeitsmedienleitungen (120, 122) regeln, wobei wenigstens ein mit jedem Zylinder in Verbindung stehendes Ventil (118, 126) ein elektronisch gesteuertes Ventil ist,
wobei das Verfahren das Erzeugen von Befehlssignalen umfasst, um die elektronisch gesteuerten Ventile aktiv zu steuern und dadurch die Nettoverdrängung des Arbeitsmediums durch jeden Zylinder (100) bei jedem Zyklus des Zylinderarbeitsvolumens zu bestimmen,
wobei die Grundfrequenz der Zylinder (100), die aktive Zyklen (400) ausführen, bzw. die Grundfrequenz der Zylinder, die inaktive Zyklen (402) ausführen, proportional zu der Drehgeschwindigkeit der drehbaren Welle ist, und
**dadurch gekennzeichnet, dass** das Verfahren das Steuern des Hydraulikgetriebes derart umfasst, dass die Frequenz einer oder mehrerer Intensitätsspitzen (400, 402, 452, 454, 456) in dem Frequenzspektrum (450) des Musters von aktiven und inaktiven Zyklen des Zylinderarbeitsvolumens nicht innerhalb eines oder mehrerer Bereiche von unerwünschten Frequenzen (406, 410) bleibt, oder derart, dass die Intensität einer oder mehrerer Intensitätsspitzen (400, 402, 452, 454, 456) innerhalb des einen oder der mehreren Bereiche von unerwünschten Frequenzen (406, 410) reduziert wird, wobei die Drehgeschwindigkeit der drehbaren Welle (20) berücksichtigt wird, wobei der eine oder die mehreren Bereiche von unerwünschten Frequenzen (406, 410) eine oder mehrere Resonanzfrequenzen (404, 408) eines Teils einer Maschine (4, 8) umfassen, die Teil des Hydraulikgetriebes (10) ist oder mit diesem in mechanischer Verbindung steht, wobei wenigstens eine Resonanzfrequenz sich nicht proportional zu der Drehgeschwindigkeit der drehbaren Welle verändert,
wobei das Verfahren das Berechnen einer vorgeschlagenen Verdrängung des Arbeitsmediums durch die Pumpe (12) und/oder den Motor (16), das Berechnen (220, 240) der Frequenz einer oder mehrerer Intensitätsspitzen (400, 402, 452, 454, 456) des Frequenzspektrums (450) des Musters von aktiven und inaktiven Zyklen des Zylinderarbeitsvolumens, das entstehen würde, wenn die Pumpe (12) und/oder der Motor (16) aufgefordert würde bzw. würden, die vorgeschlagene Verdrängung des Arbeitsmediums vorzunehmen, und das Vergleichen (222, 242) der berechneten Frequenz oder der berechneten Frequenzen mit dem einen oder den mehreren Bereichen von unerwünschten Frequenzen (406, 410) umfasst.

## Revendications

1. Transmission hydraulique (10), comprenant:
une pompe hydraulique à débit variable (12),
un moteur hydraulique à débit variable (16),
un arbre d'entraînement (14) couplé à la pompe hydraulique (12), pour entraîner la pompe hydraulique (12), et
un arbre de sortie (20) couplé au moteur hydraulique (16), à coupler à une charge (18),
dans laquelle au moins un de la pompe hydraulique (12) et du moteur hydraulique (16) comprend:
un arbre rotatif (20),
un capteur d'arbre (112), qui mesure la position ou la vitesse de rotation de l'arbre rotatif (20),
au moins une came (110) comportant au moins un lobe,
une multiplicité de cylindres (100) présentant des volumes de travail (102) qui peuvent varier de façon cyclique avec la rotation de l'arbre rotatif (20),
une ligne de fluide de travail à basse pression (120) et une ligne de fluide de travail à haute pression (122),
une multiplicité de soupapes (118, 126) réglant l'écoulement de fluide de travail entre chaque cylindre (100) et les lignes de fluide de travail à basse pression et à haute pression (120, 122), au moins une desdites soupapes (118, 126) associée à chaque cylindre étant une soupape à commande électronique,
dans laquelle la transmission hydraulique (10) comprend des moyens de commande (32) configurés de façon à générer des signaux de commande pour commander activement lesdites soupapes à commande électronique afin de déterminer ainsi si chaque cylindre (100) exécute un cycle actif dans lequel il y a un déplacement net de fluide de travail ou un cycle inactif dans lequel il n'y a pas de déplacement net de fluide de travail, pour chaque cycle de volume de travail de cylindre,
dans laquelle la fréquence fondamentale de cylindres exécutant des cycles actifs (400) ou la fréquence fondamentale de cylindres exécutant des cycles inactifs (402) est proportionnelle à la vitesse de rotation de l'arbre rotatif, et
**caractérisée en ce que** les moyens de commande (32) sont configurés de façon à commander la transmission hydraulique (10) afin d'éviter que la fréquence d'un ou de plusieurs pic(s) d'intensité (400, 402, 452, 454, 456) du spectre de fréquences (450) du schéma de cycles actifs et inactifs de volume de travail de cylindre exécutés par les cylindres reste à l'intérieur d'une ou de plusieurs plage(s) de fréquences indésirables (406, 410) ou afin de réduire l'intensité d'un ou de plusieurs desdits pics d'intensité (400, 402, 452, 454, 456) à l'intérieur de ladite une ou desdites plusieurs plage(s) de fréquences indésirables (406, 410), compte tenu de la vitesse de rotation de l'arbre rotatif (20), ladite une ou lesdites plusieurs plage(s) de fréquences indésirables (406, 410) comprenant une ou plusieurs fréquence(s) de résonance (404, 408) d'une portion d'une machine (4, 8), qui fait partie de ou qui est en liaison mécanique avec la transmission hydraulique (10), au moins une desdites fréquences de résonance ne variant pas proportionnellement à la vitesse de rotation de l'arbre rotatif,
dans laquelle les moyens de commande (32) sont configurés pour calculer un déplacement proposé de fluide de travail par ledit au moins un de la pompe (12) et du moteur (16), et pour calculer (220, 240) la fréquence d'un ou de plusieurs pic(s) d'intensité (400, 402, 452, 454, 456) du spectre de fréquences (450) du schéma de cycles actifs et inactifs de volume de travail de cylindre qui apparaîtrai(en)t si ledit au moins un de la pompe (12) ou du moteur (16) était nécessaire pour mettre en oeuvre le déplacement proposé de fluide de travail et pour comparer (222, 242) la ou les fréquence(s) calculée(s) avec ladite ou lesdites plusieurs plage(s) de fréquences indésirables (406, 410).

2. Transmission hydraulique (10) selon la revendication 1, dans laquelle ladite fréquence d'un ou de plusieurs pic(s) d'intensité (400, 402, 452, 454, 456) du spectre de fréquences (450) du schéma de cycles actifs et inactifs de volume de travail de cylindre comprend la fréquence fondamentale de cylindres exécutant des cycles actifs (400), ou une fonction linéaire de celle-ci, ou la fréquence fondamentale de cylindres exécutant des cycles inactifs (402), ou une fonction linéaire de celle-ci.

3. Transmission hydraulique (10) selon la revendication 1, dans laquelle les moyens de commande (32) tiennent également compte d'un signal ou de plusieurs signaux qui détermine(nt) le schéma de cycles actifs et inactifs de volume de travail de cylindre ou qui représente(nt) le schéma de cycles actifs et inactifs de volume de travail de cylindre.

4. Transmission hydraulique (10) selon la revendication 1, dans laquelle pour un groupe de cylindres dans la multiplicité de cylindres (100), il y a un autre cylindre à l'intérieur du groupe de cylindres qui a sensiblement le même volume de travail (102) durant tous les cycles de volume de travail de cylindre.

5. Transmission hydraulique (10) selon la revendication 4, dans laquelle les cylindres (100) dans le groupe de cylindres sont en relation d'entraînement avec la même came annulaire, et ladite came annulaire comporte une multiplicité de lobes, de telle manière que pour chaque cylindre (100) dans le groupe de cylindres, il y ait un autre cylindre qui a sensiblement le même volume de travail durant tous les cycles de volume de travail de cylindre.

6. Transmission hydraulique (10) selon la revendication 5, dans laquelle le groupe de cylindres en relation d'entraînement avec la même came annulaire comprend A cylindres, la came annulaire comporte B lobes et le nombre de cylindres ayant sensiblement le même volume de travail (102) durant tous les cycles de volume de travail de cylindre (la redondance, C) est le plus grand commun diviseur de A et B.

7. Transmission hydraulique (10) selon la revendication 6, dans laquelle le groupe de cylindres se compose d'un nombre (D, le nombre de phases) d'ensembles du même nombre (C, la redondance) de cylindres ayant sensiblement le même volume de travail durant tous les cycles de volume de travail de cylindre (102), et les moyens de commande (32) sont configurés pour sélectionner si chaque cylindre (100) dans un tel ensemble de cylindres exécuterait un cycle actif ou inactif sur un cycle donné de volume de travail de cylindre en un point de décision unique.

8. Transmission hydraulique (10) selon la revendication 1, dans laquelle les moyens de commande (32) sont configurés pour commander la transmission hydraulique (10) afin d'éviter que la fréquence d'un ou de plusieurs pic(s) d'intensité (400, 402, 452, 454, 456) du spectre de fréquences (450) du schéma de cycles actifs et inactifs de volume de travail de cylindre reste à l'intérieur d'une ou de plusieurs plage(s) de fréquences indésirables (406, 410), compte tenu de la vitesse de rotation de l'arbre rotatif (20) en augmentant ou en diminuant la proportion de cylindres (100) qui exécutent des cycles actifs.

9. Transmission hydraulique (10) selon la revendication 1, dans laquelle les moyens de commande (32) commandent la transmission hydraulique (10) afin d'éviter que ladite fréquence dudit un ou desdits plusieurs pic(s) d'intensité (400, 402, 452, 454, 456) dans le spectre de fréquences (450) du schéma de cycles actifs et inactifs de volume de travail de cylindre reste à l'intérieur d'une ou de plusieurs plage(s) de fréquences indésirables (406, 410), par un ou plusieurs des moyens suivants: faire augmenter ou diminuer la pression dans la ligne de fluide de travail à haute pression (122) et faire augmenter ou diminuer la vitesse de rotation de l'arbre rotatif (20).

10. Transmission hydraulique (10) selon la revendication 7, dans laquelle les moyens de commande (32) sont configurés pour commander la transmission hydraulique (10) afin d'éviter que la fréquence d'un ou de plusieurs pic(s) d'intensité (400, 402, 452, 454, 456) du spectre de fréquences (450) du schéma de cycles actifs et inactifs de volume de travail de cylindre reste à l'intérieur d'une ou de plusieurs plage(s) de fréquences indésirables (406, 410), en sautant au moins un des cylindres (100) dans ledit groupe de cylindres.

11. Transmission hydraulique (10) selon la revendication 7, dans laquelle les moyens de commande (32) sont configurés pour commander la transmission hydraulique (10) afin de réduire l'intensité d'un ou de plusieurs pic(s) d'intensité (400, 402, 452, 454, 456) du spectre de fréquences (450) du schéma de cycles actifs et inactifs de volume de travail de cylindre en décalant le minutage d'au moins certains des signaux de commande, par rapport aux cycles de volume de travail de cylindre.

12. Machine (1) comprenant une transmission hydraulique (10) selon la revendication 1, dans laquelle une ou plusieurs desdites plages de fréquences indésirables (406, 410) comprend/comprennent une ou plusieurs fréquence(s) de résonance (404, 408) qui ne varient pas proportionnellement à la vitesse de rotation de l'arbre rotatif (108).

13. Machine (1) selon la revendication 12, dans laquelle la machine est un générateur à éolienne (1) comportant une turbine (6) couplée à la pompe hydraulique (12) et comprenant une multiplicité de pales (8), et un générateur d'électricité (18) couplé au moteur hydraulique (16), dans laquelle une ou plusieurs desdites plages de fréquences indésirables (406, 410) comprend/comprennent une ou plusieurs des fréquences suivantes: une fréquence de résonance des pales (408), une fréquence de résonance de la turbine, une fréquence de résonance d'une tour (404) du générateur à éolienne, et une fréquence de résonance d'un arbre d'entraînement connectant la turbine à la pompe hydraulique.

14. Procédé d'utilisation d'une transmission hydraulique (10), la transmission hydraulique comprenant:
une pompe hydraulique à débit variable (12),
un moteur hydraulique à débit variable (16),
un arbre d'entraînement (14) couplé à la pompe hydraulique (12), pour entraîner la pompe hydraulique (12), et
un arbre de sortie (20) couplé au moteur hydraulique (16), à coupler à une charge (18),
dans laquelle au moins un de la pompe hydraulique (12) et du moteur hydraulique (16) comprend:
un arbre rotatif (20),
un capteur d'arbre (112), qui mesure la position ou
la vitesse de rotation de l'arbre rotatif (20),
au moins une came (110) comportant au moins un lobe,
une multiplicité de cylindres (100) présentant des volumes de travail (102) qui peuvent varier de façon cyclique avec la rotation de l'arbre rotatif (20),
une ligne de fluide de travail à basse pression (120) et une ligne de fluide de travail à haute pression (122),
une multiplicité de soupapes (118, 126) réglant l'écoulement de fluide de travail entre chaque cylindre (100) et les lignes de fluide de travail à basse pression et à haute pression (120, 122), au moins une desdites soupapes (118, 126) associée à chaque cylindre étant une soupape à commande électronique,
dans lequel le procédé comprend la production de signaux de commande pour commander activement lesdites soupapes à commande électronique afin de déterminer ainsi le déplacement net de fluide de travail par chaque cylindre (100) sur chaque cycle de volume de travail de cylindre, dans lequel la fréquence fondamentale de cylindres (100) exécutant des cycles actifs (400) ou la fréquence fondamentale de cylindres exécutant des cycles inactifs (402) est proportionnelle à la vitesse de rotation de l'arbre rotatif, et
**caractérisé en ce que** le procédé comprend la commande de la transmission hydraulique de telle manière que la fréquence d'un ou de plusieurs pic(s) d'intensité (400, 402, 452, 454, 456) dans le spectre de fréquences (450) du schéma de cycles actifs et inactifs de volume de travail de cylindre ne reste pas à l'intérieur d'une ou de plusieurs plage(s) de fréquences indésirables (406, 410), ou de telle manière que l'intensité d'un ou de plusieurs desdits pics d'intensité (400, 402, 452, 454, 456) à l'intérieur d'une ou de plusieurs plage(s) de fréquences indésirables (406, 410) soit réduite, compte tenu de la vitesse de rotation de l'arbre rotatif (20), ladite une ou lesdites plusieurs plage(s) de fréquences indésirables (406, 410) comprenant une ou plusieurs fréquence(s) de résonance (404, 408) d'une portion d'une machine (4, 8), qui fait partie de ou qui est en liaison mécanique avec la transmission hydraulique (10), au moins une desdites fréquences de résonance ne variant pas proportionnellement à la vitesse de rotation de l'arbre rotatif,
dans lequel le procédé comprend le calcul d'un déplacement proposé de fluide de travail par ledit au moins un de la pompe (12) et du moteur (16), le calcul (220, 240) de la fréquence d'un ou de plusieurs pic(s) d'intensité (400, 402, 452, 454, 456) du spectre de fréquences (450) du schéma de cycles actifs et inactifs de volume de travail de cylindre, qui apparaîtrai(en)t si ledit au moins une pompe (12) ou moteur (16) était nécessaire pour mettre en oeuvre le déplacement proposé de fluide de travail, et la comparaison (222, 242) de la ou des fréquence (s) calculée (s) avec ladite une ou lesdites plusieurs plage(s) de fréquences indésirables (406, 410).
